(19) Europäisches Patentamt

European Patent Office

Office européen des brevets

(11) **EP 4 704 426 A1**

(12) **EUROPEAN PATENT APPLICATION**
published in accordance with Art. 153(4) EPC

(43) Date of publication:
04.03.2026 Bulletin 2026/10

(21) Application number: 23935384.0

(22) Date of filing: 28.04.2023

(51) International Patent Classification (IPC):
*H04N 21/431* (2011.01)

(52) Cooperative Patent Classification (CPC):
H04N 21/431

(86) International application number:
PCT/JP2023/016895

(87) International publication number:
WO 2024/224608 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Maxell, Ltd.**
**Kyoto 618-8525 (JP)**

(72) Inventors:
• **HASHIMOTO Yasunobu**
**Otokuni-gun, Kyoto 618-8525 (JP)**
• **TSURUGA Sadao**
**Otokuni-gun, Kyoto 618-8525 (JP)**
• **NAKADE Mayumi**
**Otokuni-gun, Kyoto 618-8525 (JP)**
• **TAKAMIZAWA Naohisa**
**Otokuni-gun, Kyoto 618-8525 (JP)**

(74) Representative: **Mewburn Ellis LLP**
**Aurora Building**
**Counterslip**
**Bristol BS1 6BX (GB)**

(54) **VIDEO SHARING SYSTEM AND VIDEO SHARING METHOD**

(57) A video sharing system includes a first mobile information terminal and a second mobile information terminal, the first mobile information terminal includes a first display, a first communication interface that transmits and receives data with the second mobile information terminal, and a first processor configured to control the first display and the first communication interface, the first processor executes visual sharing control by, in accordance with a selection operation made by a user of the first mobile information terminal or a user of the second mobile information terminal, switching a display mode of a personalized display object, which is a virtual object designated for visual sharing, from a video as seen from a viewpoint position of the first mobile information terminal to a video as seen from a viewpoint direction of the second mobile information terminal based on data received via the first communication interface, and the first display displays the personalized display object using the video as seen from the viewpoint direction of the second mobile information terminal.

FIG. 1

**Description**

TECHNICAL FIELD

The present invention relates to a video sharing system and a video sharing method, and more particularly, relates to video sharing technology among mobile information terminals in a virtual space.

BACKGROUND ART

Patent Literature 1 discloses the following: "for the case where users A, B are facing each other and communicating while viewing each other's video, object displayable regions 42A, 42B are provided in front of avatars 41A, 41B of the users A, B to display objects 43A, 43B within the object displayable regions, respectively, and when the user A or the user B performs an operation such as moving, rotating, scaling, or deforming the object 43A or 43B, the same operation is also performed on the other object" (excerpted from Abstract).

CITATION LIST

PATENT LITERATURE

Patent Literature 1: JP-A-2001-22958

SUMMARY OF INVENTION

TECHNICAL PROBLEM

In conventional technology, the number of duplications of an object increases proportionally to the number of users wishing to share it. As the number of sharing users increases, the number of displayed objects increases, resulting in increased computational load and display congestion within the virtual space.
In view of the circumstances described above, an object of the present invention is to provide a video sharing system and a video sharing method, which are capable of reducing display congestion when sharing and displaying an object among multiple users.

SOLUTION TO PROBLEM

In order to solve the problems described above, the present invention includes the technical features recited in the scope of the claims. One of the aspects of the present invention is a video sharing system comprising: a first mobile information terminal; and a second mobile information terminal, the first mobile information terminal including: a first display; a first communication interface that transmits and receives data with the second mobile information terminal; and a first processor configured to control the first display and the first communication interface, the first processor being configured to execute visual sharing control by, in accordance with a selection operation made by a user of the first mobile information terminal or a user of the second mobile information terminal, switching a display mode of a personalized display object, which is a virtual object designated for visual sharing, from a video as seen from a viewpoint position of the first mobile information terminal to a video as seen from a viewpoint direction of the second mobile information terminal based on data received via the first communication interface, and the first display being configured to display the personalized display object using the video as seen from the viewpoint direction of the second mobile information terminal.
Furthermore, the present invention provides a video sharing method comprising the steps of: by a mobile information terminal, executing visual sharing control by switching a display mode of a virtual object, which is selected as a target of visual sharing among multiple users, from a video as seen from a viewpoint position of the mobile information terminal to a video as seen from a viewpoint direction of another mobile information terminal; and by the mobile information terminal, displaying the virtual object using the video as seen from the viewpoint direction of the other mobile information terminal.

ADVANTAGEOUS EFFECTS OF INVENTION

According to the present invention, in order to make a target virtual object appear the same to users, no duplicates are created but the display of the target virtual object is switched to show it as if it was seen from the same direction. This enables suppression of the increase in computational load and also prevention of display congestion within the virtual space. Other objects, configurations, and effects not described above will be clarified in the following embodiments.

BRIEF DESCRIPTION OF DRAWINGS

[FIG. 1] FIG. 1 is a schematic configuration diagram of a video sharing system according to the first embodiment.
[FIG. 2] FIG. 2 is a hardware configuration diagram of an HMD.
[FIG. 3] FIG. 3 is a hardware configuration diagram of a smartphone.
[FIG. 4] FIG. 4 is a hardware configuration diagram of a server.
[FIG. 5] FIG. 5 is a functional block diagram of a video sharing program.
[FIG. 6] FIG. 6 illustrates a video of a virtual space as seen from a normal terminal viewpoint.
[FIG. 7] FIG. 7 illustrates a video of a virtual space as seen from each terminal viewpoint at the point at which visual sharing for a selected virtual object begins.
[FIG. 8] FIG. 8 illustrates a state of a virtual space during visual sharing.
[FIG. 9] FIG. 9 illustrates an example of a state of a virtual space after visual sharing ends.
[FIG. 10] FIG. 10 illustrates a coordinate system for a personalized display object.
[FIG. 11] FIG. 11 illustrates a position and an orientation of a personalized display object coordinate system relative to a virtual space coordinate system.
[FIG. 12] FIG. 12 illustrates that, in the state illustrated in FIG. 6, a positional relationship among two terminal viewpoints and a virtual object as viewed from above.
[FIG. 13] FIG. 13 illustrates a positional relationship among two terminal viewpoints and a virtual object when the visual sharing illustrated in FIG. 7 begins.
[FIG. 14] FIG. 14 illustrates a display reference placement for a master terminal when visual sharing begins.
[FIG. 15] FIG. 15 illustrates a display reference placement for a slave terminal when visual sharing begins.
[FIG. 16] FIG. 16 illustrates a relationship between a horizontal reference direction of a master terminal and a horizontal reference direction of a slave terminal.
[FIG. 17] FIG. 17 illustrates an example of showing a master terminal.
[FIG. 18] FIG. 18 illustrates a further example of showing a master terminal.
[FIG. 19] FIG. 19 is a flowchart showing a processing flow of a video sharing system according to the present embodiment, illustrating a mode for carrying out display control of a personalized display object in a mobile information terminal.
[FIG. 20A] FIG. 20A is a flowchart showing a processing flow of a video sharing system according to the present embodiment, illustrating a mode for carrying out display control of a personalized display object in a server.
[FIG. 20B] FIG. 20B is a flowchart showing a processing flow of a video sharing system according to the present embodiment, illustrating a mode for carrying out display control of a personalized display object in a server.
[FIG. 21] FIG. 21 illustrates a display example according to the third modification of the first embodiment.
[FIG. 22] FIG. 22 illustrates a display example according to the fourth modification of the first embodiment.
[FIG. 23] FIG. 23 illustrates a display example according to the second embodiment.
[FIG. 24] FIG. 24 illustrates a display example according to the first modification of the second embodiment.
[FIG. 25] FIG. 25 illustrates a display example according to the second modification of the second embodiment.
[FIG. 26] FIG. 26 illustrates a display example according to the third modification of the second embodiment.
[FIG. 27] FIG. 27 illustrates a display example according to the fourth modification of the second embodiment.
[FIG. 28] FIG. 28 illustrates a display example according to the fifth modification of the second embodiment.
[FIG. 29] FIG. 29 illustrates a display example according to the sixth modification of the second embodiment.

DESCRIPTION OF EMBODIMENTS

According to the present invention, among multiple mobile information terminals, the users thereof can view a virtual object in a manner as if it was seen from the viewpoint direction of another user who is at a different position, in other words, can share how it is viewed. This is expected to promote mutual understanding and improve communication. Therefore, the present invention is expected to contribute to the improvement of technology for labor-intensive industries that require work support or remote support, and thus contribute to the United Nations Sustainable Development Goals (SDGs), specifically 8.2 (increasing economic productivity through diversification, technological upgrading, and innovation, focusing on high-value-added and labor-intensive industries).

The video sharing system according to the present embodiment connects a first mobile information terminal and a second mobile information terminal through a communication line, and in accordance with a selection operation made by a user of the first mobile information terminal or a user of the second mobile information terminal, executes visual sharing control for switching a display mode of a personalized display object, which is a virtual object as a target of visual sharing, from a video as seen from a viewpoint position of the first mobile information terminal to a video as seen from a viewpoint direction of the second mobile information terminal based on data received via a first communication interface. A first display displays the personalized display object using the video as seen from the viewpoint direction of the second mobile information terminal.

Hereinafter, embodiments of the present invention will be described with reference to the drawings. In all the drawings for explaining the embodiments, the same members are provided with the same reference signs in general, and repeated explanations thereof will be omitted.

<First embodiment>

The first embodiment is the embodiment for executing visual sharing control in which, in accordance with a difference between a line-of-sight direction of a first mobile information terminal and a line-of-sight direction of a second mobile information terminal as seen from the personalized display object, the position and posture of the personalized display object in the virtual space as seen from the line-of-sight position of the first mobile information terminal are transformed to the position and posture of the personalized display object in the virtual space as seen from the line-of-sight position of the second mobile information terminal, and a video of the personalized display object as seen from the first mobile information terminal is switched to the video of the personalized display object as seen from the second mobile information terminal.

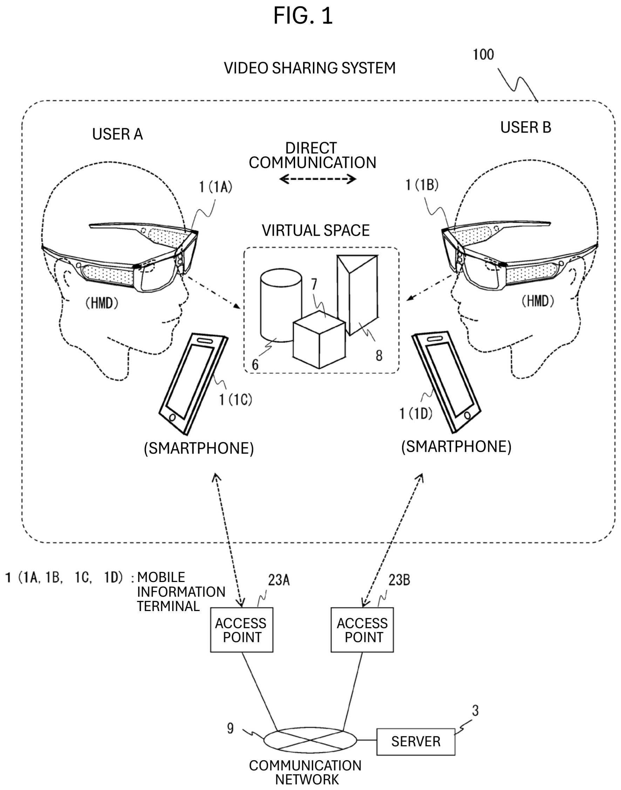

FIG. 1 is a schematic configuration diagram of a video sharing system according to the first embodiment.

As illustrated in FIG. 1, a user A wears an HMD (Head Mounted Display) 1A as a mobile information terminal 1 and operates a smartphone 1C as the mobile information terminal 1. Similarly, a user B wears an HMD 1B as the mobile information terminal 1 and operates a smartphone 1C as the mobile information terminal 1.

The smartphone 1C is connected to a network 9 via an access point 23A, and a smartphone 1D is connected to the network 9 via an access point 23B, and both the smartphone 1C and the smartphone 1D communicate with a server 3 connected to the network 9. In the case where the mobile information terminals 1 are in the same location, they may use the same access point.

The HMD 1A carries out short-range wireless connection with the smartphone 1C, and the HMD 1B carries out short-range wireless connection with the smartphone 1D. The HMDs 1A, 1B may also communicate directly with the access points 23A, 23B.

In the video sharing system 100, the HMD 1A and the HMD 1B communicate directly or indirectly through the network 9, and the users A, B view the same virtual objects 6, 7, 8 placed in the same virtual space.

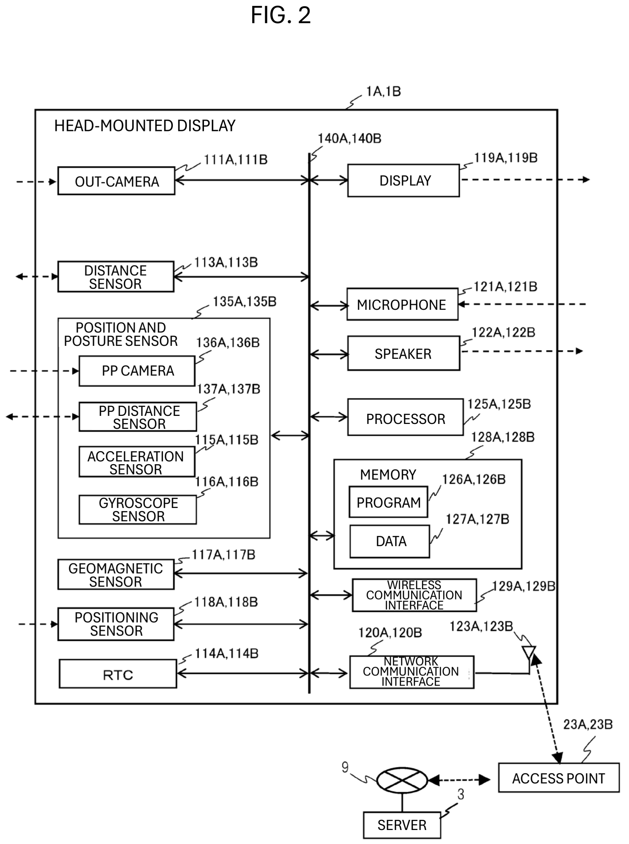

FIG. 2 is a hardware configuration diagram of the HMDs 1A, 1B.

The HMD 1A and the HMD 1B have the same configurations. In the following, common components between the HMD 1A and the HMD 1B are distinguished by providing the reference signs with subscripts A, B.

The HMD 1A and the HMD 1B include out-cameras 111A, 111B, distance sensors 113A, 113B, position and posture sensors 135A, 135B, geomagnetic sensors 117A, 117B, positioning sensors 118A, 118B, RTCs (real-time clocks) 114A, 114B, displays 119A, 119B, microphones 121A, 121B, speakers 122A, 122B, processors 125A, 125B, memories 128A, 128B, wireless communication interfaces 129A, 129B, and network communication interfaces 120A, 120B. All of them are connected to each other via buses 140A, 140B. The network communication interfaces 120A, 120B are connected to the antennas 123A, 123B for transmitting and receiving network communication signals. The displays 119A, 119B and the speakers 122A, 122B correspond to output devices, and the microphones 121A and 121B correspond to input devices.

The position and posture sensors 135A, 135B are used to measure the position and posture of the HMD 1A and those of the HMD 1B. The posture refers herein to the three-dimensional rotational position of the HMD 1A and that of the HMD 1B in the real space in which they are present. The details thereof will be described later. Specific examples of the configuration of position and posture sensors 135A, 135B include position and posture cameras 136A, 136B (hereinafter, abbreviated as "PP cameras"), position and posture distance sensors 137A, 137B (hereinafter, abbreviated as "PP distance sensors"), acceleration sensors 115A, 115B, and gyroscope sensors 116A, 116B. The PP cameras 136A, 136B may be the same as the out-cameras 111A, 111B. The PP distance sensors 137A, 137B may be the same as the distance sensors 113A, 113B.

For measuring the position and posture using the PP cameras 136A, 136B and the PP distance sensors 137A, 137B, feature points present in the external environment are used. Multiple feature points may be used, and for example, they may be feature points of an object to be captured, feature points of a room, or feature points of a buildings in the case of outdoors. For preparation, the relative positional relationship of the feature points is measured based on the measurement of the directions and distances of the feature points. In the case where the coordinate values of the feature points in the external coordinate system are known, this preparation can be omitted. Then, by measuring the changes in the directions and distances of the feature points as seen from the HMD 1A and the HMD 1B, the changes in the position and posture of the HMD 1A and the HMD 1B are measured. In the case of measuring the distances by a stereo camera method, only the PP cameras 136A, 136B may be used. In the case where the coordinate values of the feature points in the external coordinate system are known and the relationship between the external coordinate system and the vertical direction is also known, by measuring the posture using the PP cameras 136A, 136B and the PP distance sensors 137A, 137B, the relative positional relationship between the housing posture of the HMD 1A and that of the HMD 1B and the vertical direction can be obtained.

Measurement of the position and posture using the acceleration sensors 115A, 115B and the gyroscope sensors 116A, 116B is carried out by integrating the acceleration and the angular acceleration. This allows the displacement from the reference position and reference posture to be obtained. Furthermore, by measuring the gravity acceleration vector using the acceleration sensors 115A, 115B, the relative positional relationship between the housing posture of the HMD 1A and that of the HMD 1B and the vertical direction can be obtained.

For measuring the position and posture of the HMD 1A and that of the HMD 1B, both the measurement values obtained using the PP cameras 136A, 136B and the PP distance sensors 137A, 137B and the measurement values obtained using the acceleration sensors 115A, 115B and the gyroscope sensors 116A, 116B may be referred, or measurement values obtained from other types of sensors may be used.

The positioning sensors 118A, 118B are used to measure the position of the HMD 1A and that of the HMD 1B indoors or outdoors. This includes the positioning with lower accuracy than that of the measurement of the terminal housing position carried out by the position and posture sensors 135A, 135B. For example, it may be used to acquire the position information as an index when searching for library video relating to the object to be captured. Specific examples include, for indoor use, those using beacon signals or those using position indication marks. For outdoor use, for example, a GPS (Global Positioning System) receiver that uses signals from satellites may be used.

The network communication interfaces 120A, 120B are the communication interfaces for carrying out the wireless communication between at least the HMD 1A and the HMD 1B and the access points 23A, 23B using short-range wireless communication, wireless LAN, or base station communication. The network communication interfaces 120A, 120B include communication processing circuitry for various predetermined communication interfaces, and are connected to the antennas 123A, 123B. The network communication interfaces 120A, 120B transmit and receive the biometric information, image data, control signals, and the like. As the short-range wireless communication, Bluetooth (registered trademark), IrDA (Infrared Data Association, registered trademark), Zigbee (registered trademark), HomeRF (Home Radio Frequency, registered trademark), or wireless LAN such as Wi-Fi (registered trademark) may be used. As the base station communication, long-distance wireless communication such as LTE (Long Term Evolution, registered trademark), LTE-Advanced, mobile WiMAX (Worldwide Interoperability for Microwave Access, registered trademark), or WiMAX2 may be used.

The displays 119A, 119B are arranged in front of both the eyes of the users A, B wearing the HMD 1A and the HMD 1B, respectively. The processors 125A, 125B control the operations of the HMD 1A and those of the HMD 1B. In particular, they adjust the videos of the real space information captured by the out-cameras 111A, 111B or the videos received from the access points 23A, 23B, and display them on the displays 119A, 119B.

The processors 125A, 125B are configured with, for example, CPUs.

The memories 128A, 128B are configured with flash memory and non-volatile memory. The memories 128A, 128B retain programs 126A, 126B such as an operating system (OS) and operation control applications, as well as data 127A, 127B for use by the processors 125A, 125B.

The processors 125A, 125B load and execute the programs 126A, 126B in the memories 128A, 128B, and, as necessary, read out the data 127A, 127B for use in executing the programs 126A, 126B.

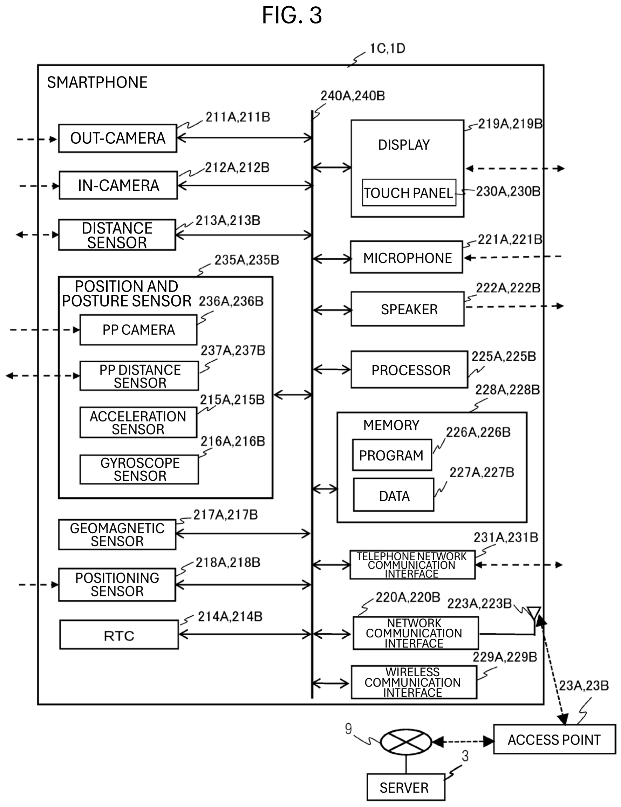

FIG. 3 is a hardware configuration diagram of a smartphone.

The components provided with the same names as those of an HMD have the same functions in general, and thus the detailed explanations thereof will be omitted unless there are specific differences therebetween.

The smartphones 1C, 1D include out-cameras 211A, 211B, in-cameras 212A, 212B, distance sensors 213A, 213B, position and posture sensors 235A, 235B, geomagnetic sensors 217A, 217B, positioning sensors 218A, 218B, RTCs 214A, 214B, displays 219A, 219B, microphones 221A, 221B, speakers 222A, 222B, processors 225A, 225B, memories 228A, 228B, network communication interfaces 220A, 220B, telephone network communication interfaces 231A, 231B, and wireless communication interfaces 229A, 229B. All of these components are connected to each other via buses 240A, 240B. The network communication interfaces 220A, 220B are connected to antennas 223A, 223B for transmitting and receiving network communication signals.

Specific examples of the configuration of the position and posture sensors 235A, 235B include, in the same manner of the HMDs, PP cameras 236A, 236B, PP distance sensors 237A, 237B, acceleration sensors 215A, 215B, and gyroscope sensors 216A, 216B. The PP cameras 236A, 236B may be the same as the out-cameras 211A, 211B. The PP distance sensors 237A, 237B may be the same as the distance sensors 213A, 213B.

The memories 228A, 228B retain programs 226A, 226B and data 227A, 227B.

Touch panels 230A, 230B serving as the input interfaces are laminated on the displays 219A, 219B.

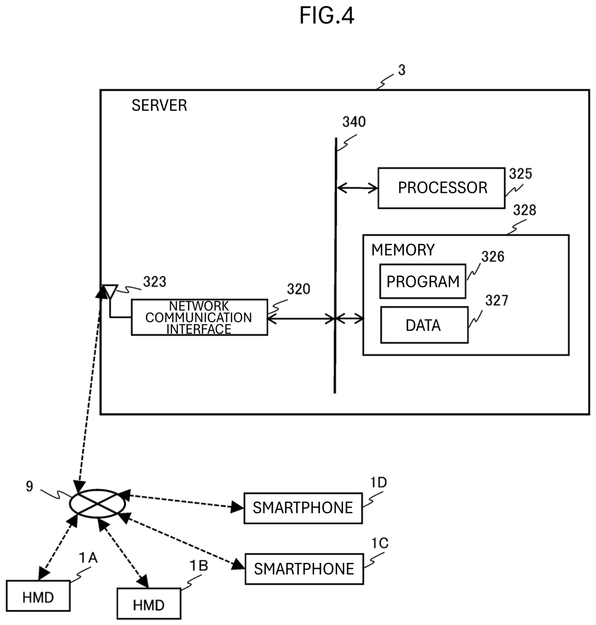

FIG. 4 is a hardware configuration diagram of the server 3.

The server 3 includes a processor 325, a memory 328, and a network communication interface 320, and all of these components are connected to each other via a bus 340. The network communication interface 320 is connected to an antenna 323 for transmitting and receiving network communication signals.

The memory 328 retains a program 326 and data 327.

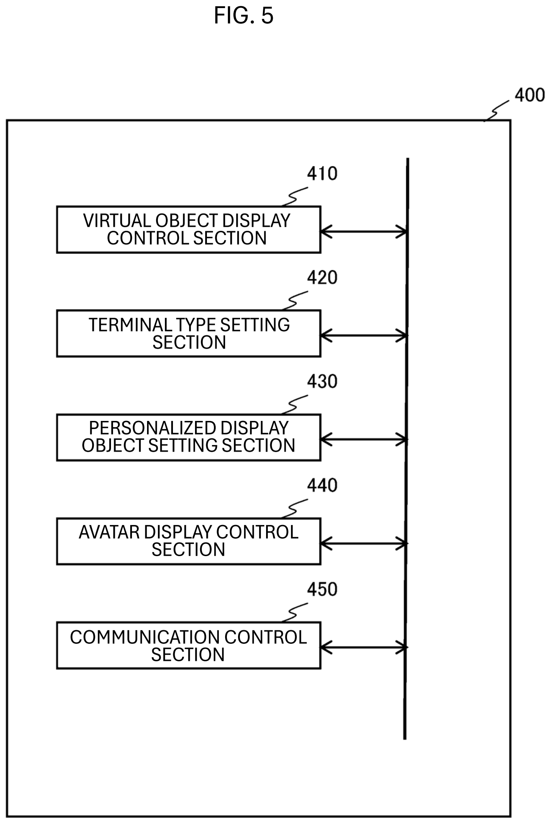

FIG. 5 is a functional block diagram of a video sharing program.

The video sharing program 400 includes a virtual object display control section 410, a terminal type setting section 420, a personalized display object setting section 430, an avatar display control section 440, and a communication control section 450.

A personalized display object is a virtual object set as a personalized display object, and is to be displayed, in the manner as if it was seen from a viewpoint of a specific mobile information terminal, on a display of another mobile information terminal. The specific mobile information terminal serves as a master terminal, and the personalized display object is displayed on a slave terminal corresponding to the other mobile information terminal, as if it was seen from the master terminal.

A virtual object that is not set as a personalized display object is called herein a non-personalized display object. Non-personalized display objects are displayed on the display of each mobile information terminal as they are seen from the viewpoints thereof. Therefore, on the display of the master terminal, the non-personalized display objects are displayed as they are seen from the viewpoint of the master terminal, and on the display of the slave terminal, the non-personalized display objects are displayed as they are seen from the viewpoint of the slave terminal.

The video sharing program 400 is installed in each mobile information terminal which is a member of the video sharing system 100. The processor of each mobile information terminal loads and executes the program in the memory thereof so as to implement the functions of each section.

The virtual object display control section 410 sets a display position, an orientation, a display color, and other display settings of a virtual object placed in the virtual space.

Upon receiving a master terminal setting operation, the terminal type setting section 420 sets, as a master terminal, the mobile information terminal of its own, and generates a notification message indicating that the mobile information terminal of its own has been set as the master terminal to the other mobile information terminals connected to the video sharing system 100. In the case of receiving a notification message indicating that another mobile information terminal has been set as a master terminal, the terminal type setting section 420 sets, as a slave terminal, the mobile information terminal of its own.

Upon receiving an operation to set at least one of the virtual objects as a personalized display object, the personalized display object setting section 430 sets the virtual object as a personalized display object. The operation to set a personalized display object may also serve as the operation to set the mobile information terminal of its own as the master terminal. In this case, upon receiving the operation to set a personalized display object, the personalized display object setting section 430 notifies, to the terminal type setting section 420, that the mobile information terminal of its own has been set as the master terminal.

Alternatively, after receiving the operation to set as the master terminal, the personalized display object setting section 430 may receive an operation to set a personalized display object from among the virtual objects.

The avatar display control section 440 carries out the display control of the avatars corresponding to each of the users of the mobile information terminals on the display of the mobile information terminal of its own, and transmits the avatar display information such as a display position, a motion, and a display color of the avatar of the mobile information terminal of its own to the other mobile information terminals. Upon receiving the avatar display information from another mobile information terminal, the avatar display control section 440 displays the avatar corresponding to the other user on the display of the mobile information terminal of its own in accordance with the information. In the embodiment to be described later, an example will be explained in which the visual sharing state is indicated using a position of an avatar, and in this case, the avatar display control section 440 also controls the display position of the avatar. In the case where a see-through HMD is used and thus the user can see the other users present in the real space, avatar display may not be necessary, and in such a case, an avatar according to the following embodiments may be replaced with the figure of the user as actually observed.

The communication control section 450 carries out the communication control of direct communication with other mobile information terminals and network communication via the access points 23A, 23B. For example, the communication control section 450 transmits and receives the notification message data indicating that the master terminal has been set, the notification message data indicating that a virtual object has been set as a personalized display object, and all other data necessary for the virtual space display.

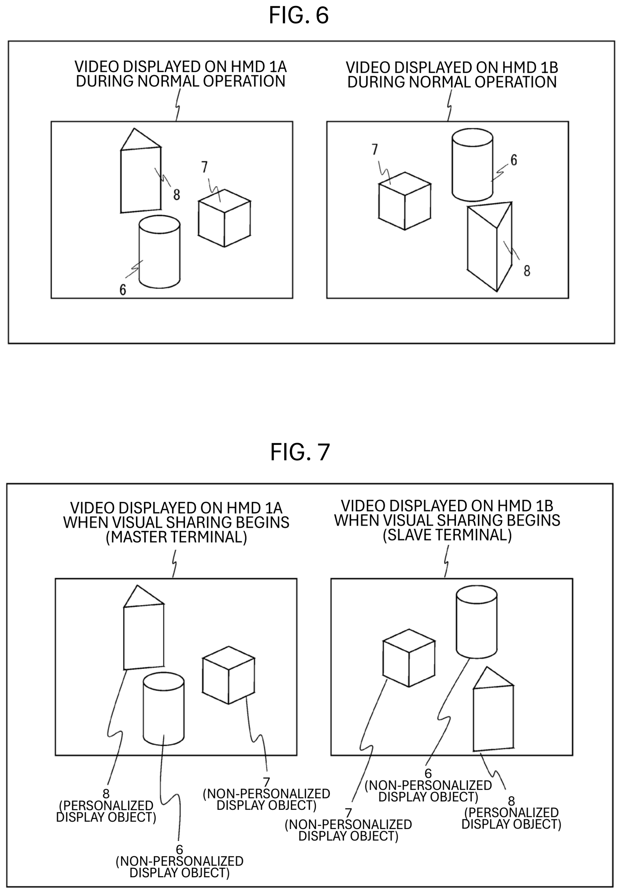

FIG. 6 and FIG. 7 illustrate display examples of a virtual space according to the present embodiment.

FIG. 6 illustrates a video of a virtual space as seen from a normal terminal viewpoint. The terminal viewpoint refers herein to the position within the virtual space, in which, for example, when the display processing system of the HMD 1A or the HMD 1B displays a virtual object present within the virtual space onto the display 119A of the HMD 1A or the display 119B of the HMD 1B, the virtual object is displayed as if it was seen from the position of the mobile information terminal.

FIG. 7 illustrates a video of a virtual space as seen from each terminal viewpoint when the visual sharing of the selected virtual object begins. The visual sharing refers herein to a method of controlling the video display so that each user can see the selected virtual object in the same orientation. Hereinafter, a virtual object that is a target of the visual sharing may be referred to as a personalized display object. A virtual object that is not a personalized display object may be referred to as a non-personalized display object.

In the following description, it is assumed that a virtual object 8 is designated as a personalized display object, and a virtual object 6 and a virtual object 7 are not designated as personalized display objects, in other words, they are non-personalized display objects. Thus, in the following description, the expression "personalized display object (virtual object 8)" may be used.

Specifically, visual sharing of a personalized display object is achieved by matching how a personalized display object is seen from the slave terminal (HMD 1B in the present example) with how it is seen from the master terminal (HMD 1A in the present example).

As illustrated in FIG. 7, upon start of the visual sharing on the slave terminal (HMD 1B), the display of the personalized display object is switched to match how it is seen from the master terminal (HMD 1A).

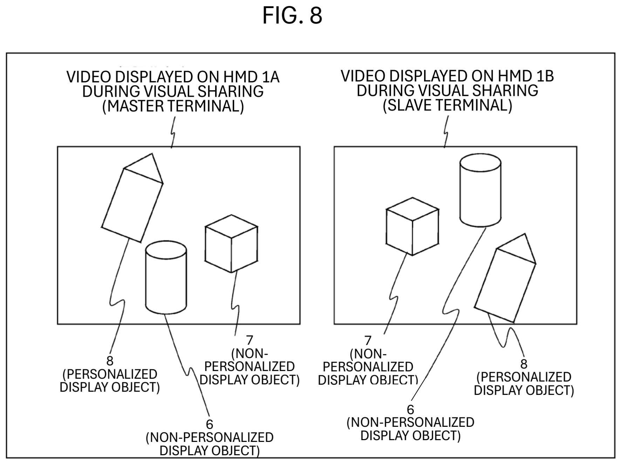

FIG. 8 illustrates a state of a virtual space during visual sharing. After the visual sharing starts, when the master terminal (HMD 1A) changes the position or posture of the personalized display object (virtual object 8), the display of the personalized display object (virtual object 8) on the slave terminal (HMD 1B) is changed accordingly. Therefore, how the personalized display object, which is the virtual object 8, appears on the slave terminal (HMD 1B) is synchronized with that on the master terminal (HMD 1A), and the personalized display object appears the same on both the slave terminal (HMD 1B) and the master terminal (HMD 1A). On the other hand, the non-personalized display objects, which are the virtual objects 6, 7, are displayed as seen from the viewpoint of the slave terminal (HMD 1B), which makes how the non-personalized display objects (virtual objects 6, 7) appear on the master terminal (HMD 1A) and the slave terminal (HMD 1B) different therebetween.

Even during the visual sharing, on the slave terminal (HMD 1B), the background of the virtual space is displayed on the display 119B using the video as seen from the viewpoint position of the slave terminal (HMD 1B). Thus, on the display 119B, a video in which the background of the virtual space as seen from the viewpoint position of the slave terminal (HMD 1B) is combined with the personalized display object 8 as seen from the viewpoint direction of the master terminal (HMD 1A) and the non-personalized display objects 6, 7 as seen from the viewpoint direction of the slave terminal (HMD 1B) is displayed.

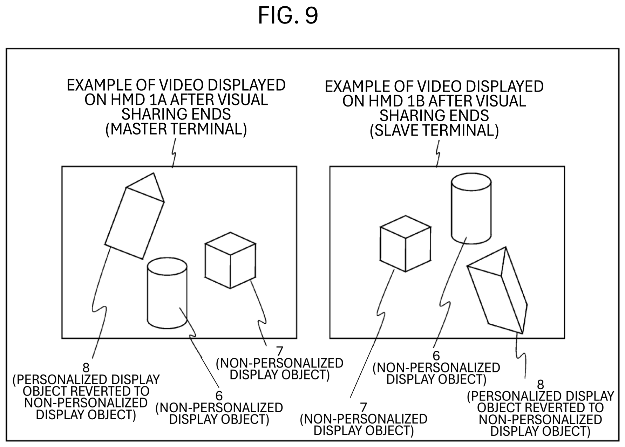

FIG. 9 illustrates an example of a state of a virtual space after the visual sharing ends. When the visual sharing ends and the personalized display object (virtual object 8) reverts to a non-personalized display object, the position and posture of the non-personalized display object at that time are set to the final position and posture of the personalized display object (virtual object 8) for the master terminal (HMD 1A). At this time, on the slave terminal (HMD 1B), the non-personalized display object placed in the virtual space is displayed as seen from the terminal viewpoint of the slave terminal (HMD 1B) in the same manner as the other non-personalized display objects. Alternatively, as the processing to be executed when the visual sharing ends, the state immediately before the start of the visual sharing (state illustrated in FIG. 6) may be restored.

The roles of the master terminal (HMD 1A) and that of the slave terminal (HMD 1B) are not necessarily fixed and may be switched from each other as appropriate.

<Example of display processing for personalized display object>

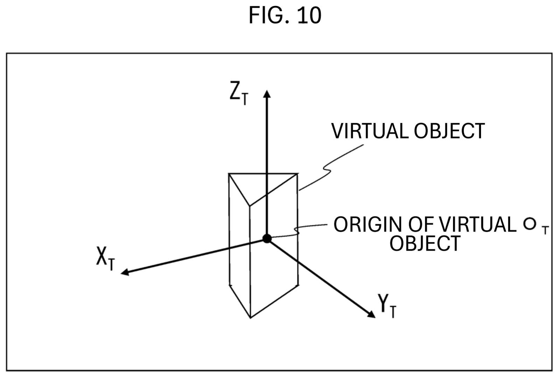

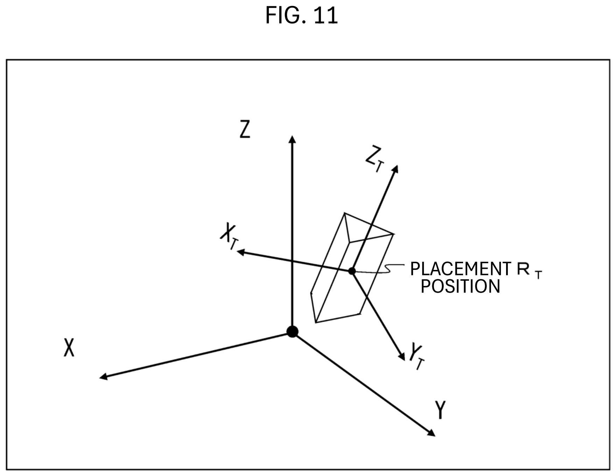

An example of the display processing for a personalized display object will be described with reference to FIG. 10 and FIG. 11. FIG. 10 illustrates a definition coordinate system of a personalized display object, and FIG. 11 illustrates a position and an orientation of a virtual object definition coordinate system relative to a virtual space coordinate system.

Firstly, it is assumed that the data for rendering each virtual object is described in the virtual object definition coordinate system $\{X_T, Y_T, Z_T\}$ (FIG. 10).

Rendering a virtual object in a virtual space can be executed by determining the position of a virtual object origin $O_T$ in a virtual space coordinate system $\{X, Y, Z\}$ (hereinafter, may be referred to as a "placement position $R_T$") and the orientation of the virtual object definition coordinate system $\{X_T, Y_T, Z_T\}$ in the virtual space (hereinafter, may be referred to as a "placement orientation") (FIG. 11). The "orientation in the virtual space" specifically refers to the orientation of the virtual object definition coordinate system $\{X_T, Y_T, Z_T\}$ relative to the virtual space coordinate system $\{X, Y, Z\}$.

Unless otherwise specified, symbols representing points, directions, and rotations in a space shall be expressed using quaternions. Furthermore, quaternions representing directions are normalized to have a magnitude of 1. Still further, the real part of quaternions representing points and directions is set to 0. The conjugate quaternion q is denoted as q*.

The placement orientation of the virtual object is denoted herein as a rotation $Q_T$, the virtual space coordinate system as $\{X, Y, Z\}$, and the directions of each axis in the virtual space coordinate system as $N_X, N_Y, N_Z$. Where the directions of the axes in the virtual object definition coordinate system $\{X_T, Y_T, Z_T\}$ in the virtual space are denoted as $N_{TX}, N_{TY}, N_{TZ}$, respectively, these directions are determined based on the rotation $Q_T$ as follows:

$$N_{TX} = Q_T \; N_X \; Q_T{}^* \; ... \; (1)$$

$$N_{TY} = Q_T \; N_Y \; Q_T{}^* \; ... \; (2)$$

$$N_{TZ} = Q_T \; N_Z \; Q_T{}^* \; ... \; (3)$$

Thus, by determining the placement position $R_T$ and the placement orientation $Q_T$, the position and posture for displaying the virtual object can be specified.

Hereinafter, a display state of the virtual object is expressed using a pair of placement position and placement orientation $[R_T, Q_T]$. Furthermore, it is assumed that the coordinate system of the virtual space can be shared between the master terminal (HMD 1A) and the slave terminal (HMD 1B), and that the information about the position and posture of each virtual object is shared by communication between the master terminal (HMD 1A) and the slave terminal (HMD 1B) or by communication via the server 3.

The methods for sharing coordinate systems have been known in, for example, WO 2021 053805, and thus the details thereof will not be described herein.

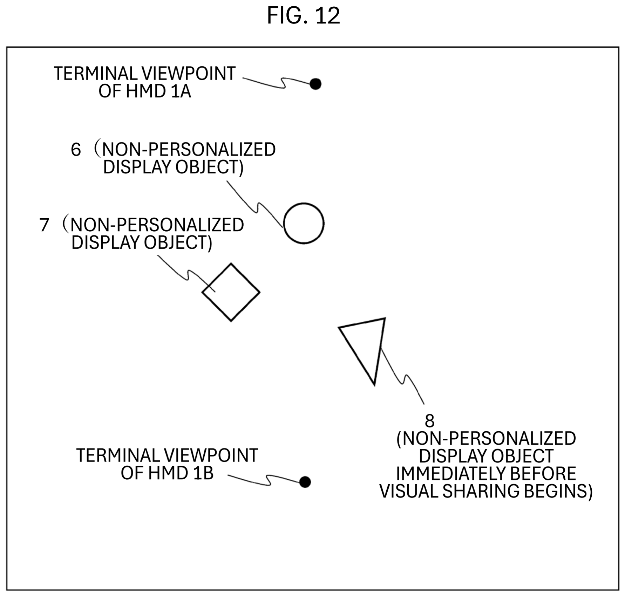

Firstly, the state immediately before the start of the visual sharing will be described with reference to FIG. 12. FIG. 12 illustrates, in the state as illustrated in FIG. 6, the positional relationship between the two terminal viewpoints and the virtual object as viewed from above. The display state of the virtual object 8 immediately before the start of the visual sharing is assumed to be $[R_{T0}, Q_{T0}]$.

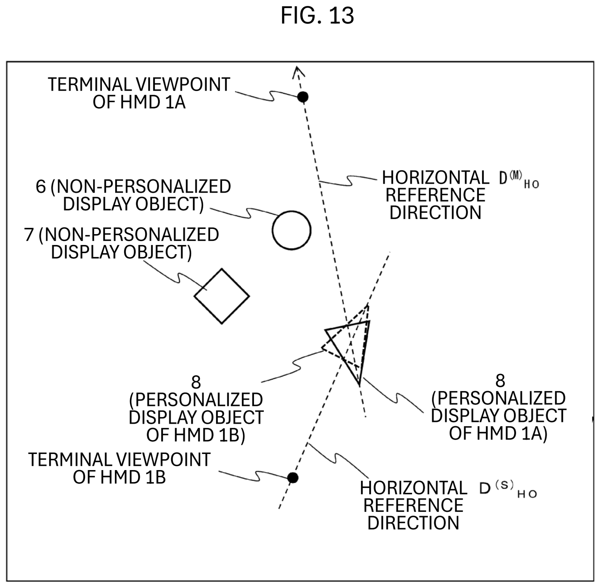

FIG. 13 illustrates the positional relationship between the two terminal viewpoints and the virtual object at the start of the visual sharing illustrated in FIG. 7. On the HMD 1B which is the slave terminal, as indicated using the dotted line, the orientation of the virtual object 8, which is a personalized display object, is changed upon start of the visual sharing.

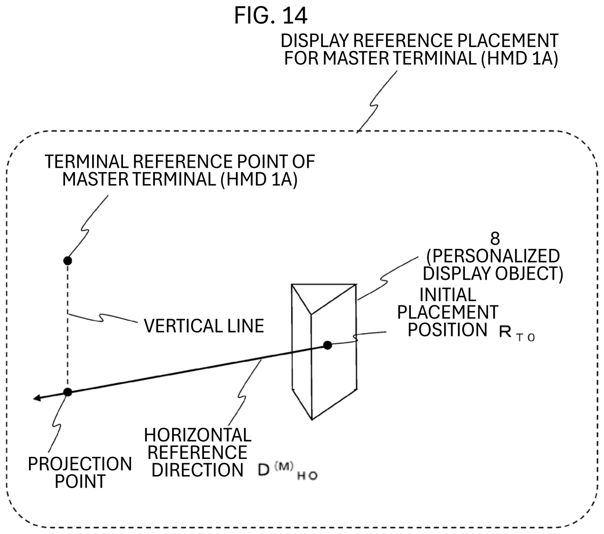

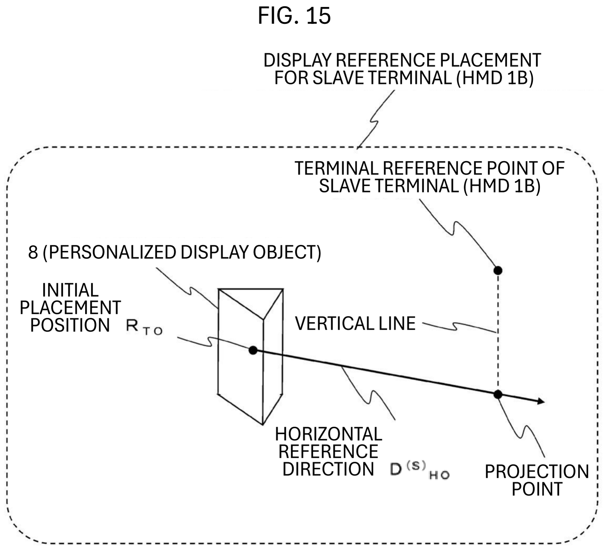

Next, the details of the display processing of the virtual display object will be described. FIG. 14 illustrates a reference display placement for the master terminal at the start of visual sharing. FIG. 15 illustrates a reference display placement for the slave terminal at the start of visual sharing.

It is assumed that the position and posture of the personalized display object in the reference display placement are in an initial state of the placement position and placement orientation of the personalized display object in each mobile information terminal, in other words, in the master terminal (HMD 1A) and the slave terminal (HMD 1B) at the start of the visual sharing illustrated in FIG. 13.

As illustrated in FIG. 14, the personalized display object as seen from the master terminal (HMD 1A) is located at an initial placement position $R_{T0}$ of the personalized display object. Similarly, as illustrated in FIG. 15, the personalized display object as seen from the slave terminal (HMD 1B) is located at an initial placement position $R_{T0}$ of the personalized display object.

In FIG. 14 and FIG. 15, the initial position of the master terminal (HMD 1A) and that of the slave terminal (HMD 1B) at the start of the visual sharing are referred to as terminal reference points for terminals.

At the start of the visual sharing, a horizontal reference direction for the personalized display object (virtual object 8) is set. The point projected vertically onto the horizontal plane including the initial placement position $R_{T0}$ of the personalized display object from the terminal reference point is defined as the projection point, and the direction from the initial placement position $R_{T0}$ of the personalized display object toward the projection point is defined as the horizontal reference direction.

In FIG. 14, the horizontal reference direction of the master terminal (HMD 1A) is denoted as $D^{(M)}{}_{H0}$, and in FIG. 15, the horizontal reference direction of the slave terminal (HMD 1B) is denoted as $D^{(S)}{}_{H0}$.

Next, the processing for reflecting the changes in the placement position and posture of the personalized display object, which has been made by the master terminal (HMD 1A), in the changes in the position and posture of the personalized display object displayed on the slave terminal (HMD 1B) during the visual sharing will be described.

Firstly, several symbols are introduced for explanation. A current placement position of the personalized display object (virtual object 8) during the visual sharing is denoted as $R^{(\#)}{}_T$, and the placement orientation as $Q^{(\#)}{}_T$. The superscript (#) indicates whether it is the master or slave, with (M) for master and (S) for slave. For transformation of the placement position $R^{(M)}{}_T$ and placement orientation $Q^{(M)}{}_T$ changed by the master terminal (HMD 1A) to the placement position $R^{(S)}{}_T$ and placement orientation $Q^{(S)}{}_T$ for use by the slave terminal (HMD 1B), rotation is applied to the placement orientation by the placement position change amount which is the difference in the horizontal reference direction.

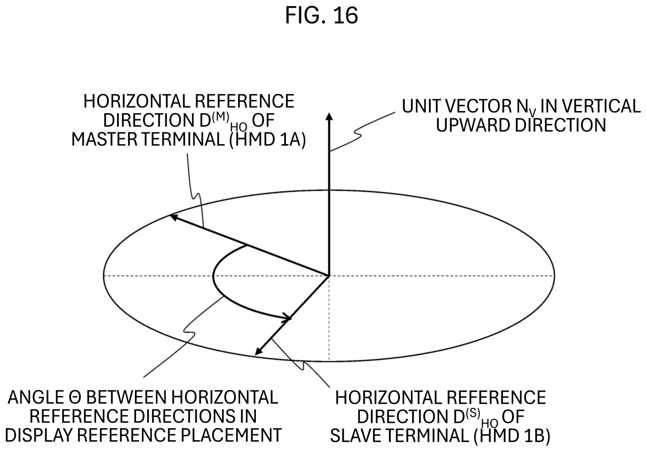

FIG. 16 illustrates the relationship between the horizontal reference direction of the master terminal and the horizontal reference direction of the slave terminal.

Transformation of the placement position $R^{(M)}{}_T$ and placement orientation $Q^{(M)}{}_T$ is carried out by rotating them around the vertical axis until the horizontal reference direction $D^{(M)}{}_{H0}$ matches the horizontal reference direction $D^{(S)}{}_{H0}$. This allows the personalized display object (virtual object 8) to be displayed on the slave terminal (HMD 1B) as if it was viewed from the direction where the master terminal (HMD 1A) is located. This rotation transformation will be called MS rotation transformation, and where the rotation transformation parameter is denoted as $Q^{(MS)}_V$, it can be described as follows:

$$Q^{(MS)}_V = \cos(\theta/2) + \sin(\theta/2)\ N_V\ \ldots\ (4)$$

Here, $N_V$ is the quaternion representation of the unit vector in the vertical upward direction. $\theta$ is the angle measured clockwise when facing the vertical upward direction, from the horizontal reference direction $D^{(M)}_{H0}$ of the master terminal in the reference display placement to the horizontal reference direction $D^{(S)}_{H0}$ of the slave terminal (HMD 1B).

More specifically, the equation (4) can be expressed as follows:

$$Q^{(MS)}_V = \cos(\theta/2) + \sin(\theta/2)\ (N_V)_x i + \sin(\theta/2)\ (N_V)_y j + \sin(\theta/2)\ (N_V)_z k \qquad\qquad (4)'$$

Here, i, j, k are the basis elements of the quaternion other than 1. In the case of complex numbers, only i is used.

Using this MS rotation transformation parameter $Q^{(MS)}_V$, the display state of the personalized display object (virtual object 8) to be displayed on the slave terminal (HMD 1B) can be obtained as follows:

$$R^{(S)}_T = R_{T0} + Q^{(MS)}_V\ (R^{(M)}_T - R_{T0})\ Q^{(MS)}_V{}^\star\ \ldots\ (5)$$

$$Q^{(S)}_T = Q^{(MS)}_V Q^{(M)}_T\ \ldots\ (6)$$

Thus, by obtaining the reference parameters $R_{T0}$, $D^{(M)}_{H0}$, and $D^{(S)}_{H0}$ and the display state of the personalized display object (virtual object 8) on the master terminal (HMD 1A) at the time of displaying it, the slave terminal (HMD 1B) can display the personalized display object (virtual object 8) in the same state as seen from the master terminal (HMD 1A), regarding the orientation in the horizontal plane.

Here, the initial setting information to be obtained by the slave terminal (HMD 1B) is the information on the terminal reference point of the master terminal (HMD 1A) and the initial placement position ($R_{T0}$) of the personalized display object (virtual object 8). The slave terminal (HMD 1B) knows its own terminal reference point. In the case of starting the visual sharing at the same time as the master terminal (HMD 1A) starts, the slave terminal (HMD 1B) has known $R_{T0}$, and thus the information on $R_{T0}$ is unnecessary. $D^{(M)}_{H0}$ is obtained based on the terminal reference point of the master terminal (HMD 1A) and $R_{T0}$, and $D^{(S)}_{H0}$ is obtained based on the terminal reference point of the slave terminal (HMD 1B) and $R_{T0}$. Thus, all the reference parameter information on $R_{T0}$, $D^{(M)}_{H0}$, and $D^{(S)}_{H0}$ are available. In the case where the avatar of the master terminal (HMD 1A) is displayed, the head position of the avatar may be used as the terminal reference position. In the case where the terminal position changes from the terminal reference point, the display of the virtual object is carried out so as to reproduce the position and posture in the virtual space obtained above considering the change.

The display state of the personalized display object (virtual object 8) may be changed by scaling the virtual object.

The virtual object on the master terminal continues to be displayed from the viewpoint of the master terminal of its own even in the visual sharing state, and thus how the virtual object is seen remains unchanged from that of a non-personalized display object in a normal operation.

In the example described above, the personalized display object is displayed on the slave terminal as if it was seen from the viewpoint of the master terminal, however, the display mode may be changed to allow it to be displayed as if it was seen from the position of the slave terminal of its own. In other words, although the permission to change the position or posture of the object is held by the master terminal, the display on the slave terminal may be carried out without applying the MS rotation transformation so that it is displayed in the same manner as non-personalized objects. In this case, the following equations are used instead of the equations (5), (6) :

$$R^{(S)}_T = R^{(M)}_T\ \ldots\ (7)$$

$$Q^{(S)}_T = Q^{(M)}_T\ \ldots\ (8)$$

The display based on the master terminal viewpoint (equations (5), (6)) will be referred to as MS transformation display, while the display based on the slave terminal viewpoint (equations (7), (8)) will be referred to as normal display.

The method of seeing an object from the viewpoint of another terminal can also be applied to terminals other than a master terminal. The rotation transformation corresponding to the MS rotation transformation can be obtained based on the terminal reference point of another terminal and a placement position of a target object, which enables similar display mode transformation. In FIG. 13, for example, the horizontal reference direction $D^{(M)}_{H0}$ is replaced with that of another terminal for which visual sharing is desired. This is useful, for example, in temporarily checking how the object is viewed from another terminal.

At the start of visual sharing, firstly, setting of a master terminal is carried out. In the case where a certain user is the main presenter throughout a scene such as a meeting, his or her terminal is set as a predetermined master terminal for that scene. Alternatively, a mobile information terminal that wishes to become a master terminal may declare itself as a master terminal and assume that role. Other slave terminals, if they wish to perform visual sharing with the master terminal, designate a target non-personalized display object and start visual sharing.

The method of designating a virtual object may be carried out, for example, by pointing using beam projection from a controller, indicating with a virtual object representing the user's hand, gazing with the eyes, or selecting a number assigned to each virtual object.

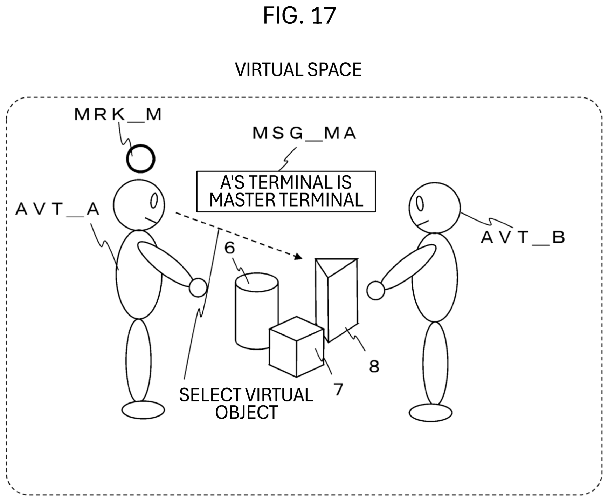

FIG. 17 illustrates an example of the master terminal display.

As illustrated in FIG. 17, in the case where an avatar AVT_A corresponding to the user A of the master terminal and an avatar AVT_B corresponding to the user B of the slave terminal are being displayed, for showing which terminal is the master terminal, a graphical display indicating that an avatar corresponds to the user of the master terminal may be added to the avatar of the master terminal user. As an example of such graphical display, a master terminal mark MRK_M may be added to the avatar AVT_A, or a master terminal display MSG_MA including text may be added.

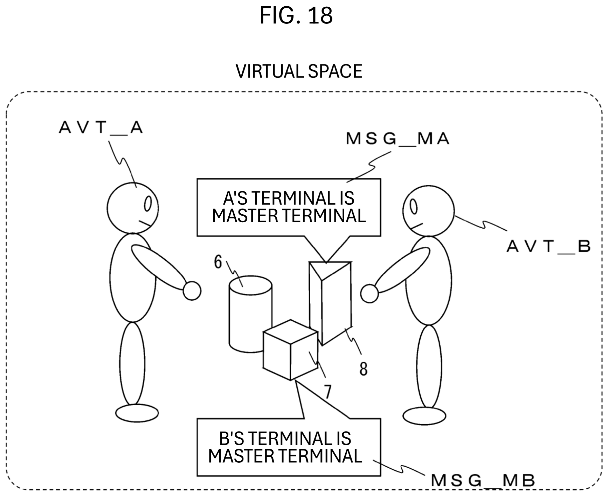

FIG. 18 illustrates a further example of the master terminal display.

The master terminal may be set for each specific virtual object. In other words, in the case where there are multiple virtual objects in the virtual space, different master terminals may be set for the virtual objects, respectively. In FIG. 18, the master terminal for the virtual object 8 is set to the HMD 1A, and thus the master terminal display MSG_MA indicating "Master terminal corresponds to Mr. A" is added to the virtual object 8. The slave terminal for the virtual object 8 is the HMD 1B.

In FIG. 18, the master terminal for the virtual object 7 is the HMD 1B, and thus the master terminal display MSG_MB indicating "Master terminal corresponds to Mr. B" is added to the virtual object 7. The slave terminal for the virtual object 7 is the HMD 1A.

In FIG. 18, the virtual object 6 is a non-personalized display object.

Visual sharing of a personalized display object may be performed among three or more mobile information terminals. In this case, one mobile information terminal serves as a master terminal, and the other mobile information terminals serve as slave terminals.

A slave terminal may be temporarily permitted to be a master terminal so as to change the position or posture of a personalized display object. In the case where a master terminal becomes a slave terminal partway through, it acquired the terminal reference point information about a new master terminal to calculate the rotation transformation for carrying out the transformation of the posture information.

Furthermore, other mobile information terminals may join a group which is engaged in visual sharing as slave terminals later. In the case where the initial setting information is obtained at the time of joining, the display state to be displayed on the mobile information terminal of its own can be obtained based on the display state of the personalized display object for the master terminal thereafter. This initial setting information may be acquired directly from the master terminal, from other slave terminals, or from the server 3.

In a cases such as a meeting where a master terminal is set in advance, visual sharing may be started only by the master terminal to set the initial setting information. Then, slave terminals that wish to perform the visual sharing obtain the initial setting information as appropriate and start the visual sharing.

The virtual objects for which visual sharing is performed may be multiple, and different master terminals may be set for the multiple virtual objects, respectively.

All display control for virtual objects may be performed by the server 3. In this case, each mobile information terminal transmits its initial setting information to the server 3. The initial setting information in this case is the terminal reference position of each mobile information terminal and the information on the initial placement position of the personalized display object at the time it became the master terminal. Furthermore, the mobile information terminal that became the master terminal transmits the change information about the display state of the personalized display object by the master terminal to the server 3. The server 3 performs the display control of the personalized display object for each mobile information terminal.

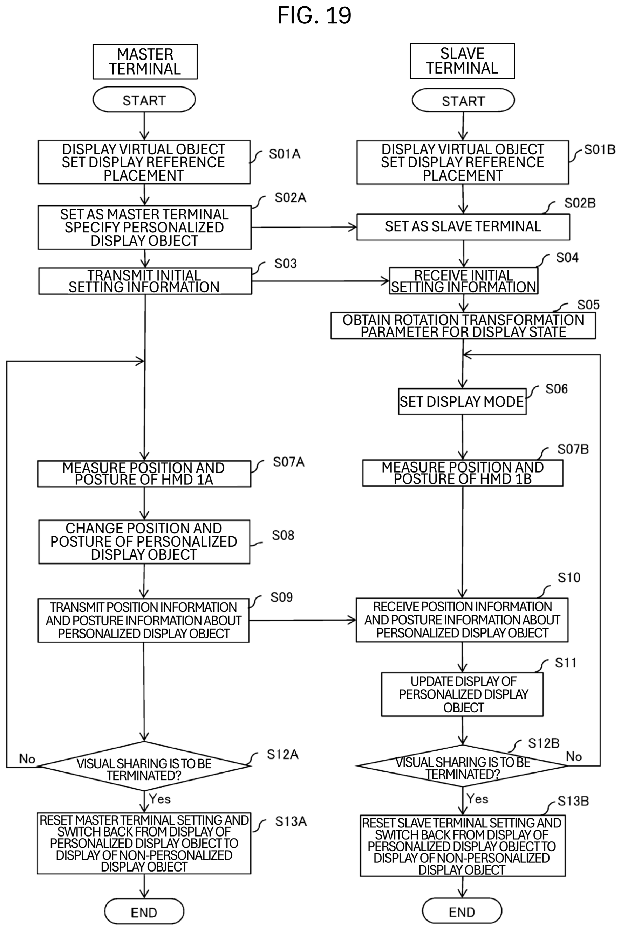

FIG. 19 is a flowchart illustrating the processing flow of the video sharing system according to the present embodiment, in which display control of a personalized display object is performed on a mobile information terminal. Hereinafter, as illustrated in FIG. 1, an example is described in which one of three virtual objects is designated as a personalized display object and displayed between the user A and the user B.

Firstly, upon start of the video sharing processing, more specifically, upon start of the visual sharing processing of a personalized display object between the HMD 1A and the HMD 1B, at least one virtual object is displayed on each of the HMD 1A and the HMD 1B, and the reference display placement is set (S01A, S01B).

Next, the HMD 1A accepts the setting processing as the master terminal. In this step, the HMD 1A also accepts the designation of the personalized display object (S02A). Upon the processing above, the HMD 1A notifies the HMD 1B that the HMD 1A has become the master terminal. Upon receiving this notification, the HMD 1B performs the setting as a slave terminal (S02B).

The master terminal (HMD 1A) transmits the initial setting information to the slave terminal (HMD 1B) (S03), and the slave terminal (HMD 1B) receives the initial setting information (S04). The initial setting information includes the terminal reference point information about the master terminal (HMD 1A). The initial setting information also includes the information indicating which of the virtual objects is the personalized display object and the information indicating its initial placement position.

The slave terminal (HMD 1B) obtains the MS rotation transformation parameter $Q^{(MS)}_V$ for carrying out the transformation of the display state using the reference point information about the master terminal (HMD 1A) included in the initial setting information as received and the terminal reference point information about the mobile information terminal of its own (S05).

Next, the display mode is set on the HMD 1B (S06). Here, the display mode includes the display from the master terminal viewpoint using the MS rotation transformation (equations (5), (6)) and the normal display (equations (7), (8)).

Each of the HMD 1A and the HMD 1B measures the position and posture of the terminal of its own (S07A, S07B).

When the master terminal (HMD 1A) changes the display state of the personalized display object, in other words, changes either or both of the position and posture of the personalized display object (S08), the HMD 1A transmits the change information to the slave terminal (HMD 1B) (S09), and the slave terminal (HMD 1B) receives it (S10).

On the slave terminal (HMD 1B), the display of the personalized display object is updated based on the position and posture of the master terminal (HMD 1A) and the change in the display state of the personalized display object (S11). This allows the display 119B of the HMD 1B to display the virtual object 8 as if it was seen from the viewpoint of the HMD 1A, and thus the users A, B to view the same virtual object from the same viewpoint. In other words, the users A, B can share the viewpoint.

Until an instruction to end the visual sharing is given by the user (S12A: No, S12B: No), the processing returns to steps S06A, S06B to continue displaying the personalized display object. Upon receipt of the instruction to end the visual sharing (S12A: Yes, S12B: Yes), the termination processing is performed. In the termination processing, the terminal settings are cleared on each terminal, and the display of the personalized display object is reverted to the display of the non-personalized display object to end the visual sharing (S13A, S13B).

To revert a personalized display object (virtual object 8) to the display state of a non-personalized display object, it may be restored to the display state immediately prior to initiating the visual sharing, or it may be restored to the display state on the master terminal (HMD 1A) at the end of the visual sharing. The method for restoring can be set as a default value for the visual sharing method, or it can be switched based on a selection from the user A at the master terminal (HMD 1A) at the end of the visual sharing.

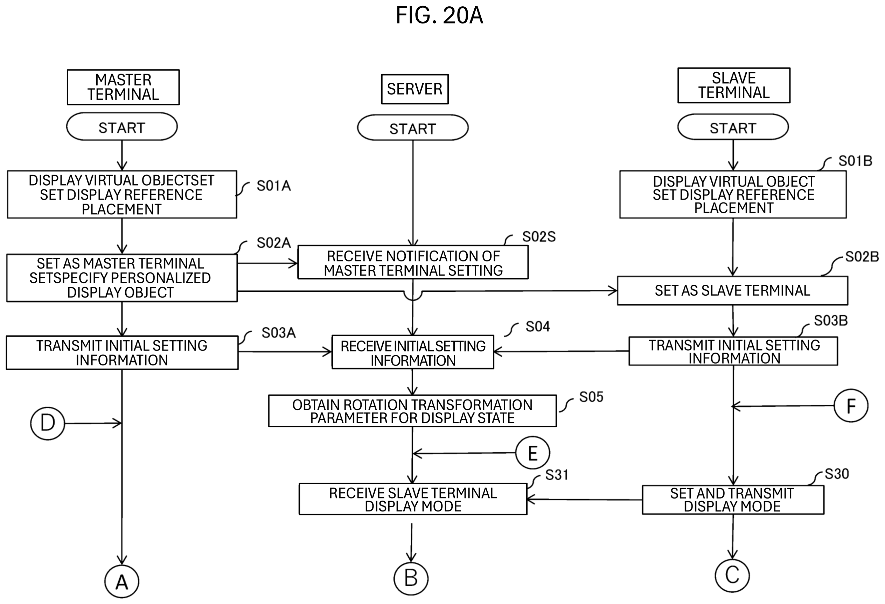

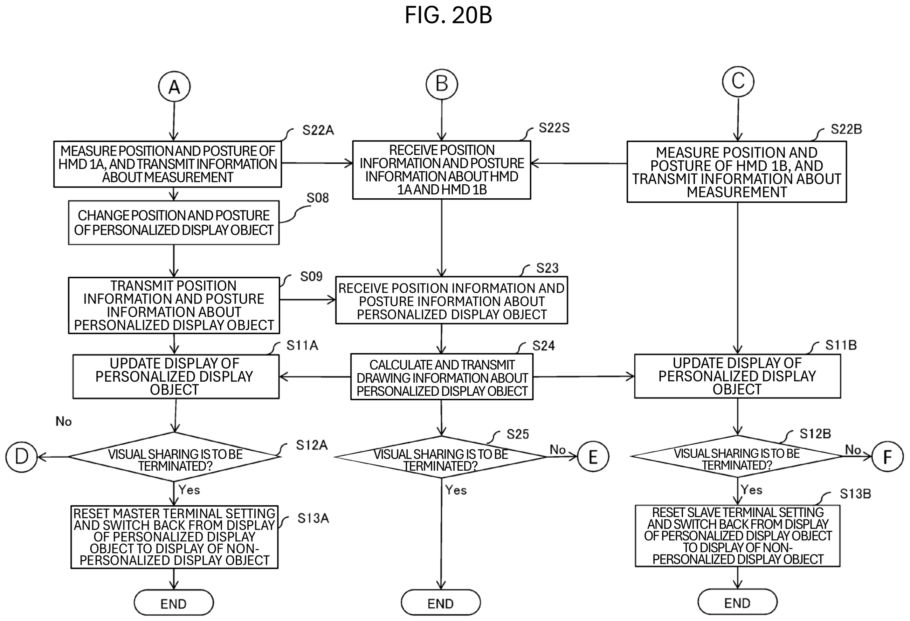

FIG. 20A and FIG. 20B are flowcharts illustrating the processing flow of the video sharing system according to the present embodiment, in which display control of a personalized display object is performed in the server. In this example, the server receives the information for transformation and performs the display control. However, the basic flow is the same as that illustrated in FIG. 19, and thus the same step numbers are used for the steps common to FIG. 19.

Firstly, upon start of the video sharing processing, more specifically, upon start of the visual sharing processing of the personalized display object between the HMD 1A and the HMD 1B, at least one virtual object is displayed on each of the HMD 1A and the HMD 1B, and the reference display placement is set (S01A, S01B).

Next, the HMD 1A accepts the setting processing as a master terminal. In this step, the HMD 1A also accepts the designation of the personalized display object. At the same time, the master terminal (HMD 1A) notifies the server 3 and the HMD 1B that the HMD 1A has become the master terminal, and the server 3 and the HMD 1B receive the notification (S02A, S02S, S02B).

Each of the master terminal (HMD 1A) and the slave terminal (HMD 1B) transmits the initial setting information to the server (S03A, S30B), and the server 3 receives the initial setting information (S04).

The server 3 obtains the rotation transformation parameter $Q^{(MS)}_V$ for the display state using the reference point information about the master terminal (HMD 1A) and the terminal reference point information about the slave terminal (HMD 1B) included in the initial setting information as received (S05).

The slave terminal (HMD 1B) sets the display mode of either its own terminal viewpoint or the master terminal viewpoint, and transmits it to the server 3 (S30). The server 3 receives this display mode setting information (S31).

Each of the HMD 1A and the HMD 1B measures the position and posture of its own terminal and transmits it to the server 3 (S22A, S22B), and the server 3 receives them (S22S).

When the master terminal (HMD 1A) changes either or both of the position and posture of the personalized display object (S08), the HMD 1A transmits the change information to the server 3 (S09), and the server 3 receives it (S23). The server 3 calculates the drawing information about the personalized object for each terminal based on the position and posture of the master terminal (HMD 1A), those of the slave terminal (1B), and the change in the position and posture of the personalized display object, and transmits the drawing information to the master terminal (HMD 1A) and the slave terminal (HMD 1B) (S24).

The master terminal (HMD 1A) and the slave terminal (HMD 1B) update the display of the personalized display object using the drawing information received from the server 3 (S11A, S11B). This allows the display 119B of the HMD 1B to display the virtual object 8 as if it was seen from the viewpoint of the HMD 1A, and thus the users A, B to view the same virtual object from the same viewpoint. In other words, the users A, B can share the viewpoint.

Until an instruction to end the visual sharing is given by the user (S12A: No, S12B: No, S25: No), the video sharing processing is continued. Upon receipt of the instruction to end the visual sharing (S12A: Yes, S12B: Yes, S25: Yes), the terminal settings of each terminal are cleared, and the display of the personalized display object is reverted to the display of the non-personalized display object to end the visual sharing (S13A, S13B, S26).

According to the present embodiment, a virtual object as seen from a viewpoint of a master terminal can be viewed from a slave terminal, which allows a user of the master terminal and a user of a slave terminal to share how the same virtual object can be seen even when they are at different positions and orientations. This enables visual sharing of virtual objects among different users, for example, in task assistance, surgical support, learning support, and educational support, and thus facilitating mutual understanding and smoother communication.

<First modification>

The permission to change the display state of the personalized display object (virtual object 8) (hereinafter, referred to as the permission to change a personalized display) does not have to be fixed to the master terminal (HMD 1A) but may be transferred between the terminals. In the case where multiple users take turns using a personalized display object (virtual object 8) to explain something, providing the explaining user's terminal with the necessary permissions is expected to facilitate the explanation.

<Second modification>

The permission to change a personalized display may be automatically transferred to the terminal that has changed a display state of a personalized object, without issuing an instruction to transfer the permission. If there are terminals that attempt to change the display at almost the same time, the permission is transferred to the terminal that has changed the display first. To avoid confusion due to conflicting operations, after the permission is transferred once, the permission to change the personalized display may remain with that terminal for a certain period of time after the operation is completed.

Where the terminal to which the permission of the master terminal (HMD 1A) is provided is denoted as "M1" and the other terminals as "S", the rotation angle from a "M1" direction to an "S" direction with the initial placement position as the center is $\theta_1$, and a rotation transformation parameter $Q^{(M1S)}{}_V$ is defined as follows:

$$Q^{(M1S)}{}_V = \cos(\theta_1/2) + \sin(\theta_1/2)\ NV\ \dots\ (9)$$

Here, "S" is a symbol used as a representative of the slave terminal (HMD 1B), including the master terminal (HMD 1A) that has temporarily become a slave terminal, and it should be noted that the value of $\theta_1$ differs for each terminal. Using this rotation transformation parameter $Q^{(M1S)}{}_V$, in the same manner as the basic form, the display state $[R^{(M1)}{}_T, Q^{(M1)}{}_T]$ of the personalized display object (virtual object 8) at the temporary master terminal (HMD 1A) can be transformed to the display state at the other slave terminal (HMD 1B).

$$R^{(S)}{}_T = R_{T0} + Q^{(M1S)}{}_V\ (R^{(M1)}{}_T - R^{T0})\ Q^{(M1S)}{}_V{}^*\ \dots\ (10)$$

$$Q^{(S)}{}_T = Q^{(M1S)}{}_V\ Q^{(M1)}{}_T\ \dots\ (11)$$

<Third modification>

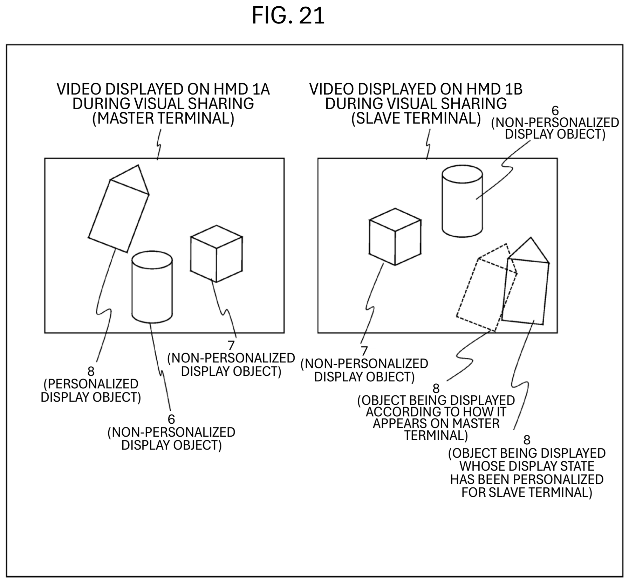

The initial placement position $R_{T0}$ of the personalized display object (virtual object 8) at the slave terminal (HMD 1B) may be changed to a unique position $R^{(S)}{}_{T0}$ for each slave terminal (HMD 1B). Furthermore, at the slave terminal (HMD 1B), how the personalized display object is seen from the direction of the master terminal (HMD 1A) may be individually adjusted by a rotation $Q^{(\Delta S)}{}_T$. FIG. 21 illustrates a display example according to the third modification of the first embodiment.

$$R^{(S)}{}_T = R^{(S)}{}_{T0} + Q^{(MS)}{}_V\ (R^{(M)}{}_T - R_{T0})\ Q^{(MS)}{}_V{}^*\ \dots\ (12)$$

$$Q^{(S)}{}_T = Q^{(\Delta S)}{}_T \ Q^{(MS)}{}_V \ Q^{(M)}{}_T \ \dots \ (13)$$

According to the third modification, a user even without holding the permission to change the position or orientation of the personalized display object (virtual object 8) can see the personalized display object (virtual object 8) temporarily from the desired direction.

Furthermore, if the placement reference point at the start of personalized display is in a position where the personalized object is difficult to see, moving it to a position that is easier for the terminal user to see enhances convenience. This method may also be used for non-personalized display objects to allow a user to see the virtual object temporarily from his or her desired direction without affecting how it appears for other users. In this case, the display of the personalized display object (virtual object 8) or non-personalized display object in the state where no changes are made at the mobile information terminal of its own may be completely cleared, displayed faintly, or displayed in a different display mode. Alternatively, the display state of the virtual object with changes made at the mobile information terminal of its own may be displayed faintly or in a different display mode.

<Fourth modification>

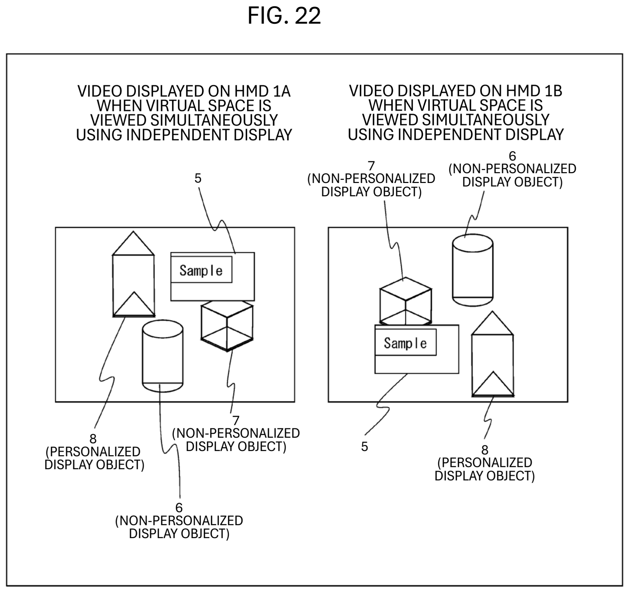

The orientation in which comments and other two-dimensional objects are seen is irrelevant as long as the content is easily readable. Therefore, there is no need to share the changes to the orientation of the object as long as the content itself can be shared. Although such an object is a type of personalized display object (virtual object 8), it does not follow the operations for changing the orientation made by other mobile information terminals, and thus it is called an independent display object 5. For example, an object with a whiteboard function is displayed at the position and orientation that are easy to see from each terminal viewpoint, while the content drawn thereon is shared among the terminals being engaged in the visual sharing. FIG. 22 illustrates a display example according to the fourth modification of the first embodiment.

<Second embodiment>

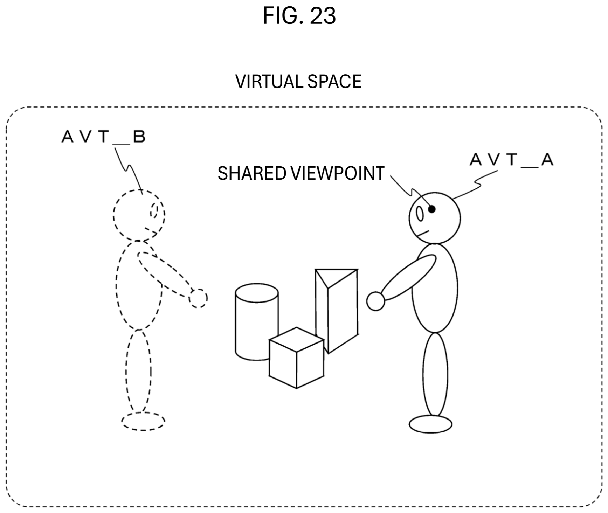

In the first embodiment, the method of personalized display is used to enable each terminal to view a virtual object of interest in the same manner. In the second embodiment, visual sharing is realized by having each terminal view a virtual space from a reference display direction set for the entire virtual space, in other words, by setting the terminal viewpoint position to the same position. In this case, displaying each user's avatar will cause the avatars to overlap from each other. Several methods can be considered for displaying these avatars. FIG. 23 illustrates a display example according to the second embodiment.

In FIG. 23, only a master avatar among the avatars at the same viewpoint position is displayed. This enables the avatar display without causing any discomfort.

The master avatar may be, for example, the avatar of the central figure in the discussion or the presenter at that time. The terminal corresponding to the master avatar is the master terminal (HMD 1A). The slave terminal (HMD 1B) other than the master terminal (HMD 1A) uses the terminal viewpoint of the master terminal (HMD 1A) as a shared viewpoint.

When using a shared viewpoint, the slave terminal (HMD 1B) may display either the master avatar or the user's own avatar (including hand parts) with height adjustments applied. Seeing one's own body or a substitute reduces the sensation of floating and provides a sense of stability. Alternatively, if the master avatar's movements give the user the sensation that they differ from those of the user's own, the avatar may be hidden.

The slave avatar originally positioned at the slave terminal (HMD 1B) may stop being displayed during visual sharing. After the visual sharing ends, the slave avatar returns to its original location, and thus it may be displayed at its original location in a form that indicates the slave avatar is currently engaged in the visual sharing, for example, by displaying a semi-transparent, light-colored object.

The permission to change the position or orientation of the virtual object may be limited to the master terminal (HMD 1A).

The audio of the slave avatar being engaged in visual sharing may be output from the visual sharing position to indicate that it is in the visual sharing position. Alternatively, to make it easier to identify who is speaking, the audio may be output from the original avatar position.

When entering the visual sharing position, the avatar may walk to that position to show the change in position. Alternatively, for the purpose of saving time, the avatar may move instantaneously to the visual sharing position.

According to the second embodiment, in the same manner as the first embodiment, sharing of the viewpoint of the master terminal and that of the slave terminal can be realized. Furthermore, it is expected that the user of the slave terminal can more easily grasp the positional relationship between the viewpoint of the master terminal and the virtual object.

<First modification>

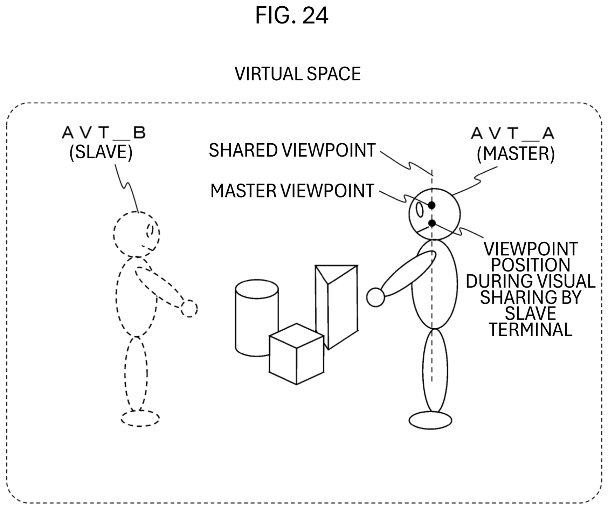

FIG. 24 illustrates a display example according to the first modification of the second embodiment.

In FIG. 24, the height of each terminal viewpoint is not constant, and thus, when the slave terminal (HMD 1B) at a height different from the viewpoint height of the master terminal (HMD 1A) is engaged in visual sharing, using the viewpoint of the master terminal (HMD 1A) causes a sense of discomfort. Therefore, a vertical line passing through the viewpoint position of the master terminal (HMD 1A) is drawn and defined as a shared viewpoint line. When the slave terminal (HMD 1B) performs viewpoint sharing, the position at the height of the terminal viewpoint of the mobile information terminal of its own on the shared viewpoint line is used as the viewpoint for visual sharing. This can eliminate the above-mentioned sense of discomfort.

On a slave terminal engaged in visual sharing, a slave avatar of its own may be set to be visible or invisible.

According to the first modification, in the same manner as the second embodiment, sharing of the viewpoint of the master terminal and that of the slave terminal can be realized. Furthermore, it is expected that the user of the slave terminal can more easily grasp the positional relationship between the viewpoint of the master terminal and the virtual object.

<Second modification>

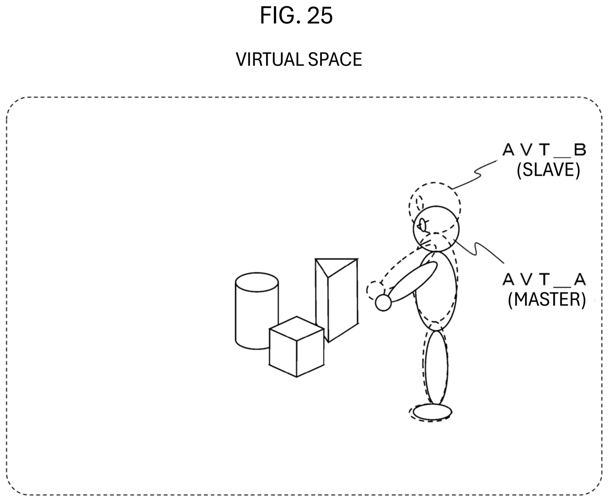

FIG. 25 illustrates a display example according to the second modification of the second embodiment.

As illustrated in FIG. 25, in the second modification, the master avatar may be changed. In the case where, while the HMD 1A is initially the master terminal and the user A is explaining the object, the user B of the HMD 1B speaks partway through, the HMD 1B may become a new master terminal so that the master avatar corresponding to the user B of the HMD 1B can be displayed at the same position. In this case, visual sharing may be carried out at the viewpoint position of the master avatar when the HMD 1B was the slave terminal, or, as in the first embodiment, visual sharing may be carried out only for the personalized display object (virtual object 8) at the original position of the mobile information terminal of its own. After the user B finishes speaking, the HMD 1B may remain at the position of the master avatar or return to the original position.

According to the second modification, in the same manner as the second embodiment, sharing of the viewpoint of the master terminal and that of the slave terminal can be realized. Furthermore, it is expected to make it easier for the user of the slave terminal to intuitively grasp that he or she is sharing the viewpoint with the master terminal.

<Third modification>

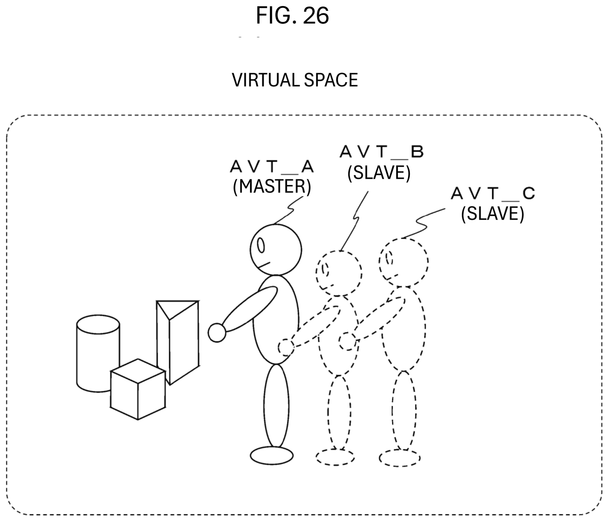

FIG. 26 illustrates a display example according to the third modification of the second embodiment.

As illustrated in FIG. 26, in the third modification, slave avatars being engaged in visual sharing may be displayed lined up behind a master avatar.

According to the third modification, in the same manner as the second embodiment, sharing of the viewpoint of the master terminal and that of the slave terminal can be realized. Furthermore, it is expected to make it easier for the user of the master terminal and the user of the slave terminal to intuitively grasp that who has entered the shared viewpoint position.

<Fourth modification >

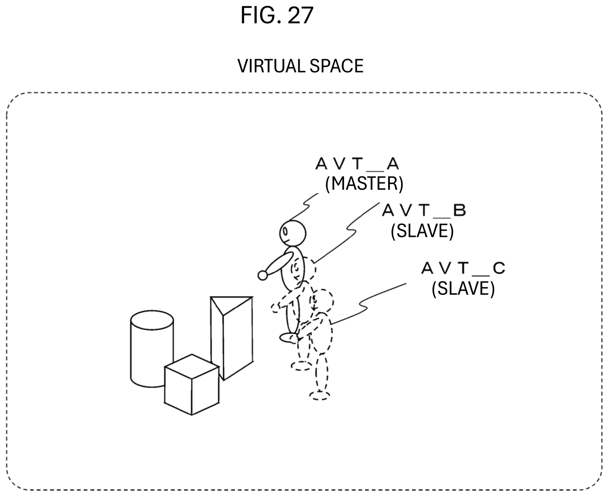

FIG. 27 illustrates a display example according to the fourth embodiment of the second embodiment.

As illustrated in FIG. 27, in the fourth modification, the avatars being engaged in visual sharing may be displayed in a reduced size at the visual sharing position.

According to the fourth modification, in the same manner as the second embodiment, sharing of the viewpoint of the master terminal and that of the slave terminal can be realized. Furthermore, reducing the area for displaying avatars makes it easier to secure the area for displaying virtual objects.

Alternatively, the master avatar may be displayed at its original size or with a smaller scaling rate than that of the slave avatar to make it stand out.

<Fifth modification>

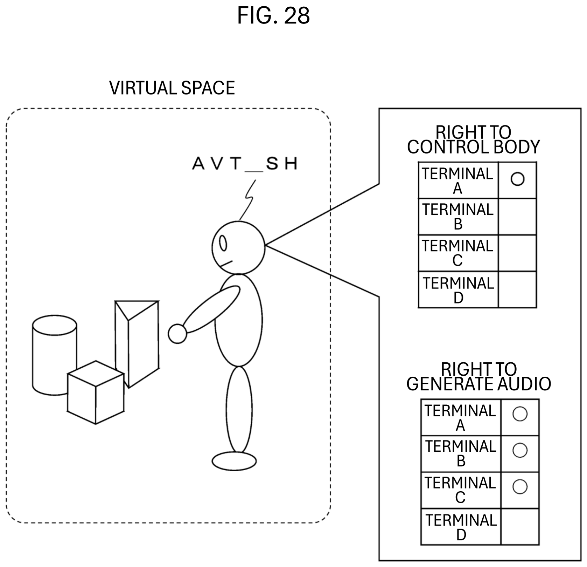

FIG. 28 illustrates a display example according to the fifth modification of the second embodiment.

In the fifth modification illustrated in FIG. 28, a shared avatar for use by multiple mobile information terminals is employed. The mobile information terminals that use a shared avatar AVT_SH are capable of sharing viewpoints. The permission to control the body of the avatar is limited to either one of the mobile information terminals. To avoid confusion, the permission to output audio may be limited to a few terminals.

To distinguish the shared avatar AVT_SH from other avatars used individually, the appearance of the shared avatar AVT_SH may be made different from the appearance of other individually used avatars.

<Sixth modification>

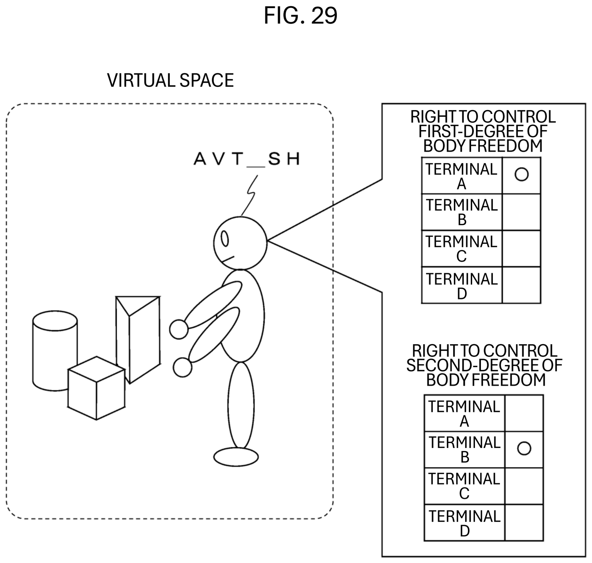

FIG. 29 illustrates a display example according to the sixth modification of the second embodiment.

In the sixth modification illustrated in FIG. 29, the degree of freedom of the body may be increased, for example, by increasing the number of arms, which is, however, not usual in the normal human appearance, so as to perform collaborative control by multiple terminals.

This enables complicated operations on objects.

Furthermore, it also enables assistance for work from the same body position, from an educational perspective.

FIG. 29 illustrates the case in which the number of arms is increased. The degree of freedom of the avatar's body is divided, and each mobile information terminal obtains the permission to control for each degree of freedom.

For example, it is assumed that the normal body part corresponds to the first degree of freedom, and the added lower arm part corresponds to the second degree of freedom. When working with the lower arm and if the torso part moves, the user of the terminal controlling the second degree of freedom may not be able to control as intended. For this case, restrictions may be added to the control of the first degree of freedom, for example, by restricting the movement of the torso part to either a stationary state or a speed below a specified threshold.

Alternatively, the lower arm may be completely separated from the movement of the first degree of freedom.

It may be separated from the movement of the first degree of freedom only for a temporary period of time during work. The target body part of the first degree of freedom (for example, upper arm) and the target body part of the second degree of freedom (for example, lower arm) may overlap from each other in the virtual space.

According to the present embodiments, multiple mobile information terminals are connected for communication and a user can see a virtual object as if it was seen from another person's viewpoint. In the embodiments described above, upon receipt of a user selection, a display mode of the virtual object is switched from a video as seen from the viewpoint position of the mobile information terminal of its own to a video as seen from the viewpoint direction of another mobile information terminal. This enables a user to experience visual sharing with users of other mobile information terminals.

In the above, the embodiments of the present invention have been described, and of course, the configurations for implementing the technical features according to the present invention are not limited to those described in these embodiments and various modifications can be made. For example, the embodiments described above have been explained in detail for the purpose of making the present invention to be understood easily, and thus are not necessarily limited to those having all the configurations as described. Furthermore, a part of the configuration of an embodiment may be replaced with the configuration of a further embodiment, and the configuration of an embodiment may include the configuration of a further embodiment, which are all included in the scope of the present invention. The numerical values and messages appearing in the text and drawings are merely examples, and accordingly, the advantageous effects of the present invention are not impaired even if different ones are used.

Each of the programs described in the examples of the processing may be an independent program, or a plurality of programs configuring one application program. Still further, the orders of executing the processes may be changed.

Some or all the functions and the like of the present invention may be implemented by hardware, for example, by designing them with integrated circuitry. Still further, a microprocessor unit, a CPU, or the like may interpret and execute an operation program so that some or all the functions and the like of the present invention can be implemented by software. Still further, the implementation range of the software is not limited, and hardware and software may be used in combination. Still further, some or all the functions may be realized by a server. Note that the server may be the one which executes the functions in cooperation with other components by communication, which may be, for example, a local server, a cloud server, an edge server, a net service, or the like. Information such as programs, tables, and files for realizing the functions may be stored in a recording device such as a memory, a hard disk, or an SSD (Solid State Drive), or a recording medium such as an IC card, an SD card, or a DVD, or may be stored in a device on a communication network.

Still further, the control lines and information lines which are considered to be necessary for the purpose of explanation are indicated herein, but not all the control lines and information lines of actual products are necessarily indicated. It may be considered that almost all the components are actually connected to each other.

The embodiments described above include the following aspects.

(Appendix 1)

A video sharing system comprising:

a first mobile information terminal; and
a second mobile information terminal,

the first mobile information terminal including:

a first display;
a first communication interface that transmits and receives data with the second mobile information terminal; and
a first processor configured to control the first display and the first communication interface,

the first processor being configured to execute visual sharing control by, in accordance with a selection operation made by a user of the first mobile information terminal or a user of the second mobile information terminal, switching a display mode of a personalized display object, which is a virtual object designated for visual sharing, from a video as seen from a viewpoint position of the first mobile information terminal to a video as seen from a viewpoint direction of the second mobile information terminal based on data received via the first communication interface, and
the first display being configured to display the personalized display object using the video as seen from the viewpoint direction of the second mobile information terminal.

(Appendix 2)

A video sharing method comprising the steps of:

by a mobile information terminal, executing visual sharing control by switching a display mode of a virtual object, which is selected as a target of visual sharing among multiple users, from a video as seen from a viewpoint position of the mobile information terminal to a video as seen from a viewpoint direction of another mobile information terminal; and
by the mobile information terminal, displaying the virtual object using the video as seen from the viewpoint direction of the other mobile information terminal.

REFERENCE SIGNS LIST

1A: HMD
1B: HMD
1C: smartphone
1D: smartphone
3: server
5: independent display object
6: virtual object
7: virtual object
8: virtual object
9: network
23A: access point
23B: access point
100: video sharing system
111A: out-camera
111B: out-camera
113A: distance sensor
113B: distance sensor
114A: RTC
114B: RTC
115A: acceleration sensor
115B: acceleration sensor
116A: gyroscope sensor
116B: gyroscope sensor
117A: geomagnetic sensor
117B: geomagnetic sensor
118A: positioning sensor
118B: positioning sensor
119A: display
119B: display
120A: network communication interface

120B: network communication interface
121A: microphone
121B: microphone
122A: speaker
122B: speaker
123A: antenna
123B: antenna
125A: processor
125B: processor
126A: program
126B: program
127A: data
127B: data
128A: memory
128B: memory
129A: wireless communication interface
129B: wireless communication interface
135A: position and posture sensor
135B: position and posture sensor
136A: position and posture camera
136B: position and posture camera
137A: position and posture distance sensor
137B: position and posture distance sensor
140A: bus
140B: bus
211A: out-camera
211B: out-camera
212A: in-camera
212B: in-camera
213A: distance sensor
213B: distance sensor
214A: RTC
214B: RTC
215A: acceleration sensor
215B: acceleration sensor
216A: gyroscope sensor
216B: gyroscope sensor
217A: geomagnetic sensor
217B: geomagnetic sensor
218A: positioning sensor
218B: positioning sensor
219A: display
219B: display
220A: network communication interface
220B: network communication interface
221A: microphone
221B: microphone
222A: speaker
222B: speaker
223A: antenna
223B: antenna
225A: processor
225B: processor
226A: program
226B: program
227A: data
227B: data
228A: memory

228B: memory
229A: wireless communication interface
229B: wireless communication interface
230A: touch panel
230B: touch panel
231A: telephone network communication interface
231B: telephone network communication interface
235A: position and posture sensor
235B: position and posture sensor
236A: position and posture camera
236B: position and posture camera
237A: position and posture distance sensor
237B: position and posture distance sensor
240A: bus
240B: bus
320: network communication interface
323: antenna
325: processor
326: program
327: data
328: memory
340: bus
400: video sharing program
410: virtual object display control section
420: terminal type setting section
430: personalized display object setting section
440: avatar display control section
450: communication control section
AVT_A: avatar
AVT_B: avatar
AVT_SH: shared avatar
MRK_M: master terminal mark
MSG_MA: master terminal display
MSG_MB: master terminal display

**Claims**

1. A video sharing system comprising:

   a first mobile information terminal; and
   a second mobile information terminal,
   the first mobile information terminal including:

      a first display;
      a first communication interface that transmits and receives data with the second mobile information terminal; and
      a first processor configured to control the first display and the first communication interface,

   the first processor being configured to execute visual sharing control by, in accordance with a selection operation made by a user of the first mobile information terminal or a user of the second mobile information terminal, switching a display mode of a personalized display object, which is a virtual object designated for visual sharing, from a video as seen from a viewpoint position of the first mobile information terminal to a video as seen from a viewpoint direction of the second mobile information terminal based on data received via the first communication interface, and
   the first display being configured to display the personalized display object using the video as seen from the viewpoint direction of the second mobile information terminal.

**2.** The video sharing system according to claim 1, wherein
the first processor is configured to:

based on a difference between a line-of-sight direction of the first mobile information terminal and a line-of-sight direction of the second mobile information terminal as seen from the personalized display object, carry out transformation of a position and a posture of the personalized display object in a virtual space as seen from the line-of-sight position of the first mobile information terminal to a position and a posture of the personalized display object in the virtual space as seen from the line-of-sight position of the second mobile information terminal, and execute the visual sharing control by switching the video of the personalized display object as seen from the first mobile information terminal to the video of the personalized display object as seen from the second mobile information terminal.

**3.** The video sharing system according to claim 1, wherein
the first processor executes the visual sharing control by superimposing a terminal viewpoint position of the first mobile information terminal on a terminal viewpoint position of the second mobile information terminal in the virtual space, so as to switch the video of the personalized display object as seen from the first mobile information terminal to the video of the personalized display object as seen from the second mobile information terminal.

**4.** The video sharing system according to claim 1, wherein

the first processor is configured to execute display control by displaying a non-personalized display object, which is a virtual object not designated for the visual sharing, on the first display using the video as seen from the viewpoint position of the first mobile information terminal, and
the first display is configured to simultaneously display the personalized display object using the video as seen from the viewpoint direction of the second mobile information terminal and the non-personalized display object using the video as seen from the viewpoint position of the first mobile information terminal.

**5.** The video sharing system according to claim 1, wherein
the first processor is configured to execute display control by, on the first display, displaying a video in which the personalized display object using the video as seen from the viewpoint direction of the second mobile information terminal is placed on a background of a virtual space using the video as seen from the viewpoint position of the first mobile information terminal.

**6.** The video sharing system according to claim 1, wherein

a plurality of virtual objects is placed in a virtual space,
one of the virtual objects is displayed on both the first mobile information terminal and the second mobile information terminal using a video as seen from a line-of-sight position of the second mobile information terminal, and
another one of the virtual objects is displayed on both the first mobile information terminal and the second mobile information terminal using a video as seen from a line-of-sight position of the first mobile information terminal.

**7.** The video sharing system according to claim 3, wherein
the first processor is configured to:

use an avatar corresponding to the user of the first mobile information terminal to indicate the viewpoint position of the first mobile information terminal, and
use an avatar corresponding to the user of the second mobile information terminal to indicate a viewpoint position of the second mobile information terminal.

**8.** The video sharing system according to claim 7, wherein
the first processor is configured to, instead of the avatar corresponding to the user of the first mobile information terminal and the avatar corresponding to the user of the second mobile information terminal, use a shared avatar for viewing the personalized display object to indicate a viewing position of the personalized display object.

**9.** A video sharing method comprising the steps of:

by a mobile information terminal, executing visual sharing control by switching a display mode of a virtual object, which is selected as a target of visual sharing among multiple users, from a video as seen from a viewpoint position of the mobile information terminal to a video as seen from a viewpoint direction of another mobile information terminal; and

by the mobile information terminal, displaying the virtual object using the video as seen from the viewpoint direction of the other mobile information terminal.

# FIG. 1

VIDEO SHARING SYSTEM

100

USER A

DIRECT COMMUNICATION

USER B

1 (1A)

(HMD)

VIRTUAL SPACE

7

6

8

1 (1B)

(HMD)

1 (1C)

(SMARTPHONE)

1 (1D)

(SMARTPHONE)

1 (1A, 1B, 1C, 1D) : MOBILE INFORMATION TERMINAL

23A

ACCESS POINT

23B

ACCESS POINT

9

COMMUNICATION NETWORK

3

SERVER

# FIG. 2

FIG. 3

1C,1D

SMARTPHONE

240A,240B

211A,211B
OUT-CAMERA

212A,212B
IN-CAMERA

213A,213B
DISTANCE SENSOR

235A,235B
POSITION AND POSTURE SENSOR

236A,236B
PP CAMERA

237A,237B
PP DISTANCE SENSOR

215A,215B
ACCELERATION SENSOR

216A,216B
GYROSCOPE SENSOR

217A,217B
GEOMAGNETIC SENSOR

218A,218B
POSITIONING SENSOR

214A,214B
RTC

219A,219B
DISPLAY

230A,230B
TOUCH PANEL

221A,221B
MICROPHONE

222A,222B
SPEAKER

225A,225B
PROCESSOR

228A,228B
MEMORY

226A,226B
PROGRAM

227A,227B
DATA

231A,231B
TELEPHONE NETWORK COMMUNICATION INTERFACE

220A,220B
NETWORK COMMUNICATION INTERFACE

223A,223B

229A,229B
WIRELESS COMMUNICATION INTERFACE

23A,23B

ACCESS POINT

9

3

SERVER

23

FIG.4

FIG. 5

400

410
VIRTUAL OBJECT DISPLAY
CONTROL SECTION

420
TERMINAL TYPE SETTING
SECTION

430
PERSONALIZED DISPLAY
OBJECT SETTING SECTION

440
AVATAR DISPLAY CONTROL
SECTION

450
COMMUNICATION CONTROL
SECTION

## FIG. 6

VIDEO DISPLAYED ON HMD 1A
DURING NORMAL OPERATION

VIDEO DISPLAYED ON HMD 1B
DURING NORMAL OPERATION

8

7

6

7

6

8

## FIG. 7

VIDEO DISPLAYED ON HMD 1A
WHEN VISUAL SHARING BEGINS
(MASTER TERMINAL)

VIDEO DISPLAYED ON HMD 1B
WHEN VISUAL SHARING BEGINS
(SLAVE TERMINAL)

8
(PERSONALIZED
DISPLAY OBJECT)

7
(NON-PERSONALIZED
DISPLAY OBJECT)

6
(NON-PERSONALIZED
DISPLAY OBJECT)

6
(NON-PERSONALIZED
DISPLAY OBJECT)

7
(NON-PERSONALIZED
DISPLAY OBJECT)

8
(PERSONALIZED
DISPLAY OBJECT)

FIG. 8

VIDEO DISPLAYED ON HMD 1A
DURING VISUAL SHARING
(MASTER TERMINAL)

VIDEO DISPLAYED ON HMD 1B
DURING VISUAL SHARING
(SLAVE TERMINAL)

8
(PERSONALIZED
DISPLAY OBJECT)

7
(NON-
PERSONALIZED
DISPLAY OBJECT)

6
(NON-PERSONALIZED
DISPLAY OBJECT)

7
(NON-
PERSONALIZED
DISPLAY OBJECT)

8
(PERSONALIZED
DISPLAY OBJECT)

6
(NON-PERSONALIZED
DISPLAY OBJECT)

FIG. 9

EXAMPLE OF VIDEO DISPLAYED
ON HMD 1A AFTER VISUAL
SHARING ENDS
(MASTER TERMINAL)

EXAMPLE OF VIDEO DISPLAYED
ON HMD 1B AFTER VISUAL
SHARING ENDS
(SLAVE TERMINAL)

8
(PERSONALIZED DISPLAY
OBJECT REVERTED TO
NON-PERSONALIZED
DISPLAY OBJECT)

6
(NON-PERSONALIZED
DISPLAY OBJECT)

7
(NON-PERSONALIZED
DISPLAY OBJECT)

6
(NON-PERSONALIZED
DISPLAY OBJECT)

7
(NON-PERSONALIZED
DISPLAY OBJECT)

8
(PERSONALIZED DISPLAY
OBJECT REVERTED TO
NON-PERSONALIZED
DISPLAY OBJECT)

# FIG. 10

FIG. 11

## FIG. 12

TERMINAL VIEWPOINT
OF HMD 1A

6 （NON-PERSONALIZED
DISPLAY OBJECT)

7 （NON-PERSONALIZED
DISPLAY OBJECT)

8
(NON-PERSONALIZED
DISPLAY OBJECT
IMMEDIATELY BEFORE
VISUAL SHARING BEGINS)

TERMINAL VIEWPOINT
OF HMD 1B

## FIG. 13

TERMINAL VIEWPOINT
OF HMD 1A

6 (NON-PERSONALIZED
DISPLAY OBJECT)

7 (NON-PERSONALIZED
DISPLAY OBJECT)

HORIZONTAL $D^{(M)}_{HO}$
REFERENCE
DIRECTION

8
(PERSONALIZED
DISPLAY OBJECT
OF HMD 1B)

8
(PERSONALIZED
DISPLAY OBJECT
OF HMD 1A)

TERMINAL VIEWPOINT
OF HMD 1B

HORIZONTAL $D^{(S)}_{HO}$
REFERENCE
DIRECTION

## FIG. 14

DISPLAY REFERENCE PLACEMENT
FOR MASTER TERMINAL (HMD 1A)

TERMINAL REFERENCE POINT OF
MASTER TERMINAL (HMD 1A)

8
(PERSONALIZED
DISPLAY OBJECT)
INITIAL
PLACEMENT
POSITION $R_{T0}$

VERTICAL LINE

HORIZONTAL
REFERENCE
DIRECTION $D^{(M)}_{H0}$

PROJECTION
POINT

# FIG. 15

DISPLAY REFERENCE PLACEMENT
FOR SLAVE TERMINAL (HMD 1B)

TERMINAL REFERENCE POINT OF
SLAVE TERMINAL (HMD 1B)

8 (PERSONALIZED DISPLAY OBJECT)

INITIAL
PLACEMENT
POSITION  $R_{TO}$

VERTICAL LINE

HORIZONTAL
REFERENCE
DIRECTION  $D^{(S)}_{HO}$

PROJECTION
POINT

FIG. 16

HORIZONTAL REFERENCE
DIRECTION $D^{(M)}_{HO}$ OF
MASTER TERMINAL (HMD 1A)

UNIT VECTOR $N_V$ IN VERTICAL
UPWARD DIRECTION

ANGLE $\Theta$ BETWEEN HORIZONTAL
REFERENCE DIRECTIONS IN
DISPLAY REFERENCE PLACEMENT

HORIZONTAL REFERENCE
DIRECTION $D^{(S)}_{HO}$ OF
SLAVE TERMINAL (HMD 1B)

## FIG. 17

VIRTUAL SPACE

MRK_M

MSG_MA

A'S TERMINAL IS
MASTER TERMINAL

AVT_A

AVT_B

6

SELECT VIRTUAL
OBJECT

8

7

# FIG. 18

VIRTUAL SPACE

# FIG. 19

| MASTER TERMINAL | SLAVE TERMINAL |
|---|---|

START

START

DISPLAY VIRTUAL OBJECT SET DISPLAY REFERENCE PLACEMENT — S01A

DISPLAY VIRTUAL OBJECT SET DISPLAY REFERENCE PLACEMENT — S01B

SET AS MASTER TERMINAL SPECIFY PERSONALIZED DISPLAY OBJECT — S02A

SET AS SLAVE TERMINAL — S02B

TRANSMIT INITIAL SETTING INFORMATION — S03

RECEIVE INITIAL SETTING INFORMATION — S04

OBTAIN ROTATION TRANSFORMATION PARAMETER FOR DISPLAY STATE — S05

SET DISPLAY MODE — S06

MEASURE POSITION AND POSTURE OF HMD 1A — S07A

MEASURE POSITION AND POSTURE OF HMD 1B — S07B

CHANGE POSITION AND POSTURE OF PERSONALIZED DISPLAY OBJECT — S08

TRANSMIT POSITION INFORMATION AND POSTURE INFORMATION ABOUT PERSONALIZED DISPLAY OBJECT — S09

RECEIVE POSITION INFORMATION AND POSTURE INFORMATION ABOUT PERSONALIZED DISPLAY OBJECT — S10

UPDATE DISPLAY OF PERSONALIZED DISPLAY OBJECT — S11

No — VISUAL SHARING IS TO BE TERMINATED? — S12A

VISUAL SHARING IS TO BE TERMINATED? — S12B — No

Yes

Yes

RESET MASTER TERMINAL SETTING AND SWITCH BACK FROM DISPLAY OF PERSONALIZED DISPLAY OBJECT TO DISPLAY OF NON-PERSONALIZED DISPLAY OBJECT — S13A

RESET SLAVE TERMINAL SETTING AND SWITCH BACK FROM DISPLAY OF PERSONALIZED DISPLAY OBJECT TO DISPLAY OF NON-PERSONALIZED DISPLAY OBJECT — S13B

END

END

# FIG. 20A

EP 4 704 426 A1

## FIG. 20B

```
    (A)                          (B)                          (C)
     │                            │                            │
     ▼                      ┌─S22S                             ▼
┌──S22A──────────┐    ┌─────────────────┐              ┌──S22B──────────┐
│ MEASURE POSITION│    │ RECEIVE POSITION│              │ MEASURE POSITION│
│ AND POSTURE OF  │───▶│ INFORMATION AND │◀─────────────│ AND POSTURE OF  │
│ HMD 1A, AND     │    │ POSTURE         │              │ HMD 1B, AND     │
│ TRANSMIT        │    │ INFORMATION     │              │ TRANSMIT        │
│ INFORMATION     │    │ ABOUT HMD       │              │ INFORMATION     │
│ ABOUT           │    │ 1A AND HMD 1B   │              │ ABOUT           │
│ MEASUREMENT     │    └─────────────────┘              │ MEASUREMENT     │
└─────────────────┘             │                       └─────────────────┘
     │  ┌─S08                    │                            │
     ▼                          │                            │
┌─────────────────┐            │                            │
│ CHANGE POSITION  │            │                            │
│ AND POSTURE OF   │            │                            │
│ PERSONALIZED     │            │                            │
│ DISPLAY OBJECT   │            │                            │
└─────────────────┘            │                            │
     │  ┌─S09             ┌─S23 ▼                            │
     ▼                   ┌─────────────────┐                │
┌─────────────────┐      │ RECEIVE POSITION │                │
│ TRANSMIT POSITION│      │ INFORMATION AND  │                │
│ INFORMATION AND  │─────▶│ POSTURE          │                │
│ POSTURE          │      │ INFORMATION      │                │
│ INFORMATION ABOUT│      │ ABOUT            │                │
│ PERSONALIZED     │      │ PERSONALIZED     │                │
│ DISPLAY OBJECT   │      │ DISPLAY OBJECT   │                │
└─────────────────┘      └─────────────────┘                │
     │  ┌─S11A                  │  ┌─S24             ┌─S11B   ▼
     ▼                         ▼                   ┌─────────────────┐
┌─────────────────┐      ┌─────────────────┐      │ UPDATE DISPLAY   │
│ UPDATE DISPLAY   │◀─────│ CALCULATE AND    │─────▶│ OF PERSONALIZED  │
│ OF PERSONALIZED  │      │ TRANSMIT DRAWING │      │ DISPLAY OBJECT   │
│ DISPLAY OBJECT   │      │ INFORMATION ABOUT│      └─────────────────┘
└─────────────────┘      │ PERSONALIZED     │                │
                         │ DISPLAY OBJECT   │                │
No                       └─────────────────┘                │
     │  ┌─S12A                  │  ┌─S25                     │  ┌─S12B
     ▼                         ▼                            ▼
(D)◀◇ VISUAL SHARING ◇   ◇ VISUAL SHARING ◇ No     ◇ VISUAL SHARING ◇ No
    ◇ IS TO BE        ◇   ◇ IS TO BE     ◇──▶(E)   ◇ IS TO BE     ◇──▶(F)
    ◇ TERMINATED?     ◇   ◇ TERMINATED?  ◇         ◇ TERMINATED?  ◇
     │ Yes                    │ Yes                     │ Yes
     ▼  ┌─S13A                ▼                         ▼  ┌─S13B
┌─────────────────┐      ┌─────┐              ┌─────────────────┐
│ RESET MASTER     │      │ END │              │ RESET SLAVE      │
│ TERMINAL SETTING │      └─────┘              │ TERMINAL SETTING │
│ AND SWITCH BACK  │                           │ AND SWITCH BACK  │
│ FROM DISPLAY OF  │                           │ FROM DISPLAY OF  │
│ PERSONALIZED     │                           │ PERSONALIZED     │
│ DISPLAY OBJECT TO│                           │ DISPLAY OBJECT   │
│ DISPLAY OF NON-  │                           │ TO DISPLAY OF    │
│ PERSONALIZED     │                           │ NON-             │
│ DISPLAY OBJECT   │                           │ PERSONALIZED     │
└─────────────────┘                           │ DISPLAY OBJECT   │
     │                                         └─────────────────┘
     ▼                                              │
┌─────┐                                             ▼
│ END │                                         ┌─────┐
└─────┘                                         │ END │
                                                └─────┘
```

EP 4 704 426 A1

## FIG. 21

VIDEO DISPLAYED ON HMD 1A
DURING VISUAL SHARING
(MASTER TERMINAL)

VIDEO DISPLAYED ON HMD 1B
DURING VISUAL SHARING
(SLAVE TERMINAL)

6
(NON-PERSONALIZED
DISPLAY OBJECT)

7
(NON-PERSONALIZED
DISPLAY OBJECT)

8
(PERSONALIZED
DISPLAY OBJECT)

6
(NON-PERSONALIZED
DISPLAY OBJECT)

7
(NON-PERSONALIZED
DISPLAY OBJECT)

8
(OBJECT BEING DISPLAYED
ACCORDING TO HOW IT
APPEARS ON MASTER
TERMINAL)

8
(OBJECT BEING DISPLAYED
WHOSE DISPLAY STATE
HAS BEEN PERSONALIZED
FOR SLAVE TERMINAL)

# FIG. 22

VIDEO DISPLAYED ON HMD 1A WHEN VIRTUAL SPACE IS VIEWED SIMULTANEOUSLY USING INDEPENDENT DISPLAY

VIDEO DISPLAYED ON HMD 1B WHEN VIRTUAL SPACE IS VIEWED SIMULTANEOUSLY USING INDEPENDENT DISPLAY

5

6
(NON-PERSONALIZED DISPLAY OBJECT)

7
(NON-PERSONALIZED DISPLAY OBJECT)

Sample

Sample

8
(PERSONALIZED DISPLAY OBJECT)

7
(NON-PERSONALIZED DISPLAY OBJECT)

5

8
(PERSONALIZED DISPLAY OBJECT)

6
(NON-PERSONALIZED DISPLAY OBJECT)

# FIG. 23

VIRTUAL SPACE

A V T ＿ B

SHARED VIEWPOINT

A V T ＿ A

FIG. 24

VIRTUAL SPACE

A V T _ B
(SLAVE)

SHARED VIEWPOINT

A V T _ A
(MASTER)

MASTER VIEWPOINT

VIEWPOINT
POSITION
DURING VISUAL
SHARING BY
SLAVE
TERMINAL

# FIG. 25

VIRTUAL SPACE

A V T __ B
(SLAVE)

A V T __ A
(MASTER)

## FIG. 26

VIRTUAL SPACE

## FIG. 27

VIRTUAL SPACE

## FIG. 28

VIRTUAL SPACE

A V T _ S H

**RIGHT TO CONTROL BODY**

| | |
|---|---|
| TERMINAL A | ○ |
| TERMINAL B | |
| TERMINAL C | |
| TERMINAL D | |

**RIGHT TO GENERATE AUDIO**

| | |
|---|---|
| TERMINAL A | ○ |
| TERMINAL B | ○ |
| TERMINAL C | ○ |
| TERMINAL D | |

# FIG. 29

VIRTUAL SPACE

AVT_SH

RIGHT TO CONTROL
FIRST-DEGREE OF
BODY FREEDOM

| TERMINAL A | ○ |
|---|---|
| TERMINAL B | |
| TERMINAL C | |
| TERMINAL D | |

RIGHT TO CONTROL
SECOND-DEGREE OF
BODY FREEDOM

| TERMINAL A | |
|---|---|
| TERMINAL B | ○ |
| TERMINAL C | |
| TERMINAL D | |

## INTERNATIONAL SEARCH REPORT

| International application No. |
| --- |
| **PCT/JP2023/016895** |

| | |
| --- | --- |
| **A. CLASSIFICATION OF SUBJECT MATTER** | |

***H04N 21/431***(2011.01)i
FI:  H04N21/431

According to International Patent Classification (IPC) or to both national classification and IPC

**B. FIELDS SEARCHED**

Minimum documentation searched (classification system followed by classification symbols)

H04N21/431

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-120650 A (CANON MARKETING JAPAN INC.) 06 July 2017 (2017-07-06) entire text, all drawings | 1-9 |
| A | JP 2015-163968 A (REAL VIEW IMAGING LTD.) 10 September 2015 (2015-09-10) entire text, all drawings | 1-9 |
| A | JP 9-081782 A (SONY CORPORATION) 28 March 1997 (1997-03-28) entire text, all drawings | 1-9 |
| A | US 2017/0053445 A1 (MICROSOFT TECHNOLOGY LICENSING, LLC) 23 February 2017 (2017-02-23) all paragraphs, all drawings | 1-9 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 June 2023** | **04 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 704 426 A1

**INTERNATIONAL SEARCH REPORT**
Information on patent family members

International application No.

PCT/JP2023/016895

| Patent document cited in search report | | | Publication date (day/month/year) | Patent family member(s) | | | Publication date (day/month/year) |
|---|---|---|---|---|---|---|---|
| JP | 2017-120650 | A | 06 July 2017 | JP 2016-71900 A entire text, all drawings | | | |
| JP | 2015-163968 | A | 10 September 2015 | US 2011/0128555 A1 all paragraphs, all drawings WO 2010/004563 A1 all paragraphs, all drawings KR 10-2011-0028524 A all paragraphs, all drawings CN 103529554 A all paragraphs, all drawings | | | |
| JP | 9-081782 | A | 28 March 1997 | US 6570563 B1 all paragraphs, all drawings EP 753835 A2 KR 10-0454615 B1 | | | |
| US | 2017/0053445 | A1 | 23 February 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001022958 A

- WO 2021053805 A